# EUROPEAN PATENT SPECIFICATION

(11) **EP 4 377 669 B1**
(45) Date of publication and mention of the grant of the patent: **16.09.2026**
(21) Application number: 22737504.5
(22) Date of filing: 06.07.2022
(51) Int. Cl.: G01N 15/14, G01N 15/1404, G01N 15/1409, G01N 15/1433

(54) **DETECTION OF MOLECULAR BIOLOGICAL OBJECTS, CELLULAR BIOLOGICAL OBJECTS AND CELL AGGREGATES USING QUANTITATIVE PHASE-CONTRAST MICROSCOPY**
NACHWEIS VON ZELLAGGREGATEN MITTELS QUANTITATIVER PHASENKONTRASTMIKROSKOPIE
DÉTECTION D'AGRÉGATS CELLULAIRES AU MOYEN DE LA MICROSCOPIE QUANTITATIVE À CONTRASTE DE PHASE

(30) Priority: 29.07.2021 EP 21188590; 01.04.2022 EP 22166377
(43) Date of publication of application: 05.06.2024
(73) Proprietor: Technische Universität München, 80333 München (DE)
(72) Inventor: HAYDEN, Oliver, 85368 Moosburg (DE); KLENK, Christian, 85521 Ottobrunn (DE); RÖHRL, Stefan, 93342 Reißing (DE)
(74) Representative: Lucke, Andreas
(86) International application number: PCT/EP2022/068788
(87) International publication number: WO 2023/006372

(56) References cited:
- WO-A1-2017/167361
- WO-A2-01/48455
- WO-A2-2014/146062

## Description

### FIELD OF THE INVENTION

The present invention is in the field of biomedical research and clinical diagnostics. In particular, the invention relates to a method for detecting cell aggregates of biological cells using a quantitative phase-contrast microscope, to a device for detecting cell aggregates of biological cells, to a method for detecting cellular and/or molecular biological objects using a quantitative phase-contrast microscope and to a device for detecting cellular and/or molecular biological objects.

### BACKGROUND

Conventional blood counts determine parameters such as the numbers of red blood cells, platelets, white blood cells and subtypes thereof in a blood sample of a patient, which may be used for diagnosing many different diseases. Recent studies suggest that aggregates of blood cells such as leukocyte-platelet aggregates and leukocyte aggregates may also serve as useful biomarkers for a variety of pathological conditions such as cardiovascular diseases and bacterial or viral infections, see e.g. M. Finsterbusch et al., Platelets. 2018 Nov;29(7):677-685, J. G. Burel et al., eLife 2019;8:e46045, and Michelson et al, Circulation. 2001;104:1533-1537*.*

A reliable detection of blood cell aggregates, however, is challenging since the aggregates are fragile objects and may disintegrate easily. This prevents an analysis using traditional methods for performing blood counts such as Mie scattering or fluorescence-based flow cytometry, which may require a complex and time-consuming sample preparation involving a selective lysis of erythrocytes, a staining of cell constituents and/or a fluorescent labeling. The sample preparation as well as the measurement itself may affect cell morphology and may lead to a disintegration of cell aggregates, e.g. due to mechanical forces exerted thereon during centrifugation or flow cytometry at high flow rates (typically 1-10 m/s) required for sufficient statistics on individual cells.

Digital holographic microscopy uses interference between an imaging beam and a reference beam to obtain phase as well as amplitude information of light transmitted by a sample and for example allows for reconstructing a quantitative phase shift image of the sample, see e.g. EP 1524 491 A1 and EP 2 357 539 A1. In recent years, digital holographic microscopes have successfully been employed for biomedical applications such as live cell imaging. Phase shift images of cells may be used to reliably identify cell types based on the analysis of morphological parameters and/or using machine learning classifiers. In combination with microfluidic systems, this for example allows for performing high-throughput label-free blood sample analyses such as blood counts, see e.g. US 2019/0195774 A1, facilitating the diagnosis of diseases like malaria, leukemia, and myeloproliferative neoplasms, see for example M. Ugele et al., Adv. Sci. 1800761 (2018*),* WO 2019/063548 A1 and M. Ugele et al., Proc. SPIE 11060, Optical Methods for Inspection, Characterization, and Imaging of Biomaterials IV, 110600V (2019*).* Furthermore, digital holographic microscopy has already been used to perform a quantitative analysis of platelet aggregates adhering to a surface, see e.g. WO 2016/170180 A1. The currently known methods, however, either do not allow for a reliable detection of cell aggregates or are not suitable for performing automated high-throughput analyses in a clinical setting. Moreover, these methods only provide limited information regarding the composition of the cell aggregates and may thus not be suitable for obtaining clinically relevant information, which may e.g. require an analysis of single platelets as well as large platelet-platelet aggregates at the same time.
WO 2017/167361 A1 discloses a method for aligning non-spherical biological entities such as red blood cells in a desired region within a flow chamber of a flow cell. The method comprises generating a pair of laminar sheath flows sandwiching a sample flow comprising said entities, wherein the laminar sheath flows are generated from viscoelastic fluids.

### SUMMARY OF THE INVENTION

It is thus an object of the invention to provide a method that allows for a fast and reliable detection of biological cells and cell aggregates and is suitable for performing automated high-throughput analyses in a clinical setting.

This object is met by a method for detecting cell aggregates of biological cells using a quantitative phase-contrast microscope according to claim 1 and a device for detecting cell aggregates of biological cells according to claim 6. Embodiments thereof are detailed in the corresponding dependent claims.

According to a first aspect of the invention, a method for detecting cell aggregates of biological cells using a quantitative phase-contrast microscope is provided. The method according to the first aspect of the invention comprises preparing a suspension comprising biological cells from a sample and a viscoelastic fluid. The viscoelastic fluid comprises a shear-thinning polymer having a molecular weight between 2 MDa and 10 MDa, wherein a mass fraction of the shear-thinning polymer in the suspension is less than 0.2%. The method further comprises generating a flow of the suspension along a microfluidic channel to viscoelastically focus cell aggregates in the suspension in a focal plane of the quantitative phase-contrast microscope. One or more phase shift images of the biological cells in the suspension are taken using the quantitative phase-contrast microscope and cell aggregates in the one or more phase shift images are identified.

The method may for example be performed using a device for detecting cell aggregates of biological cells according to any one of the embodiments according to the first aspect of the invention described below. The sample may be a sample extracted from a patient, in particular a liquid sample such as a blood sample. Accordingly, the biological cells may for example be or comprise blood cells, e.g. red blood cells (erythrocytes), white blood cells (leukocytes) and/or platelets (thrombocytes), and/or rare cells such as circulating tumor cells and/or circulating endothelial cells.

The suspension may be prepared by adding the viscoelastic fluid to the sample or to cells extracted from the sample or vice-versa. The viscoelastic fluid is a fluid that has both viscous and elastic properties, i.e. may exhibit properties of a viscous fluid as well as properties of an elastic solid. The viscoelastic fluid may be a non-Newtonian fluid exhibiting a viscosity that depends on the applied shear rate, in particular a shear-thinning fluid exhibiting a viscosity that decreases with the applied shear rate. The viscoelastic properties of the viscoelastic fluid may result from the shear-thinning polymer contained therein at least in part. The viscoelastic fluid may for example be an aqueous solution comprising the shear-thinning polymer, e.g. a solution consisting of water or phosphate buffered saline and the shear-thinning polymer.

The viscoelastic properties of the viscoelastic fluid may lead to viscoelastic focusing of objects such as cells and/or cell aggregates contained in the suspension when generating a flow of the suspension. The objects in the flow may for example migrate towards regions in which the shear rate is low, e.g. a center region of the flow of the suspension, in which the suspension has the highest flow velocity. In the microfluidic channel, this may for example be in the vicinity of a central plane between two opposing sidewalls of the microfluidic channel or in the vicinity of a centerline between two pairs of opposing sidewalls of the microfluidic channel.

The viscoelastic focusing of cells and/or cell aggregates within the flow of the suspension is adapted such that cells and/or cell aggregates in the suspension are focused in the focal plane of the quantitative phase-contrast microscope. For example, the viscoelastic fluid may lead to viscoelastic focusing of cells and/or cell aggregates at the center of the flow of the suspension, e.g. in the vicinity of the central plane or the centerline of the microfluidic channel. In some embodiments, the central plane and/or the centerline of the microfluidic channel may lie in the focal plane of the quantitative phase-contrast microscope. The cell aggregates in the suspension may be focused such that centers of the cell aggregates are confined to within a confinement range in a direction perpendicular to the focal plane of the microscope. For example, at least 90% of the cell aggregates, in one example at least 95% of the cell aggregates may be confined to within the confinement range. Preferably, the confinement range is less than 20 µm, in some examples less than 10 µm, in one example less than 5 µm. The confinement range may in particular be equal to or less than two times a depth of field of the microscope, in one example equal to or less than the depth of field of the microscope. In a preferred embodiment, single cells are also focused in the focal plane of the microscope, e.g. such that at least 80% of single cells, in some examples at least 90% of single cells, in one example at least 95% of single cells are confined to within the confinement range.

The viscoelastic focusing with a shear-thinning polymer having a molecular weight between 2 MDa and 10 MDa at a mass fraction in the suspension of less than 0.2% may allow for a reliable focusing of cell aggregates as well as single cells while reducing mechanical stress on the cell aggregates and preventing a polymer-induced aggregation of cells. Focusing cell aggregates and in particular a combination of cell aggregates and single cells is challenging due to the different sizes that the cell aggregates and the cells may have. A size of the cell aggregates may e.g. range from 1 µm to 50 µm, while a size of the cells may range from 1 µm to 20 µm. Human platelets for example typically have a size between 1 µm and 3 µm, while white blood cells typically have a size between 7 µm and 15 µm. Forces acting on objects in a viscoelastic fluid may depend on the size of the object such that objects of different sizes may be focused at different points/locations or objects of a certain size may not be focused at all. At the same time, shear stress within a fluid flow may act on the cell aggregates and may break cell aggregates apart, in particular at higher flow velocities. This may limit a range of flow velocities that can be used, making it even more difficult to focus cell aggregates. Furthermore, shear-thinning polymers may affect cell morphology, see e.g. J. Gonzalez-Molina et al., Sci Rep 9, 8505 (2019*),* and may even induce the formation of "artificial" cell aggregates in some cases, e.g. for red blood cells as described in J. K. Armstrong et al., Biophysical Journal 87 (2004), 4259-4270*.* Surprisingly, the present inventors have found that adding a shear-thinning polymer with a molecular weight between 2 MDa and 10 MDa at a mass fraction of less than 0.2% induces a viscoelasticity in the suspension that enables sufficient confinement of cell aggregates in the suspension using viscoelastic focusing at reduced flow velocities to prevent disintegration of cell aggregates while at the same time not inducing a formation of "artificial" cell aggregates. Thereby, the present invention allows for studying cell aggregates and in particular aggregates of blood cells by quantitative phase-contrast microscopy without the need for cell fixation and red blood cell lysis. Furthermore, aggregates testing can be performed with standard blood draw procedures using conventional blood collection tubes.

For detecting cell aggregates, the method further comprises taking one or more phase shift images of the biological cells in the suspension using the quantitative phase-contrast microscope. The quantitative phase-contrast microscope may for example be a ptychographic imaging device or a digital holographic microscope, e.g. as detailed below for the device according to the first aspect of the invention. Taking the one or more phase shift images may for example comprise capturing a sequence of images of a measurement volume along the microfluidic channel while the suspension flows along said microfluidic channel. As used herein, a phase shift image may encode a phase shift of light at one or more wavelengths as a function of position, e.g. a phase shift of light reflected off or propagating through an imaging sample such as the flow of the suspension as a function of the position in the imaging sample. In a preferential setting and contrary to conventional flow cytometry with serial cell measurements, multiple cells and/or cell aggregates are imaged in parallel to compensate for a reduced throughput due to the lower flow rates.

The one or more phase shift images may be analyzed to identify cell aggregates therein, e.g. to distinguish cell aggregates from single cells. Cell aggregates may for example be identified based on one or more morphological parameters pertaining to their size, shape and/or structure, for example a mean diameter (equivalent diameter) and/or a phase shift (optical height), e.g. by defining one or more thresholds for the respective parameters. Additionally or alternatively, cell aggregates may also be identified using classical and/or artificial intelligence-based (AI-based) computer vision techniques, e.g. using a neural network-based classifier. Identifying cell aggregates in the one or more phase shift images may in particular comprise determining a total number or fraction of cell aggregates in the one or more phase shift images, wherein the fraction of cell aggregates may e.g. be the ratio of the total number of cell aggregates to the total number of single cells and cell aggregates.

In a preferred embodiment, identifying the cell aggregates in the one or more phase shift images comprises determining a number of cells in the respective cell aggregate and/or a cell type of some or all of the cells in the respective cell aggregate. This may for example comprise performing an image segmentation on a portion of a phase shift image associated with the cell aggregate, e.g. a region-of-interest containing only the cell aggregate but no other single cells or cell aggregates, to identify constituents of the cell aggregate. The image segmentation may for example be performed using a thresholding algorithm, e.g. based on one or more thresholds for the phase shift to assign portions of the phase shift image to a respective constituent, and/or using a watershed algorithm, e.g. by interpreting the phase shift as a topographic height and identifying "basins" within the resulting topographic map as constituents of the cell aggregate. Additionally or alternatively, the image segmentation may also be performed using an edge-based method such as geodesic active contours, see e.g. P. Marquez-Neila, L. Baumela, and L. Alvarez, "A morphological approach to curvaturebased evolution of curves and surfaces", In: IEEE Transactions on Pattern Analysis and Machine Intelligence 36.1 (2013), pp. 2-17*,* a region-based method such as the Chan-Vese algorithm, see e.g. T. Chan and L. Vese, "An active contour model without edges", In: International Conference on Scale-Space Theories in Computer Vision, Springer, 1999, pp. 141-151*,* and/or a graph-based method such as the Felzenszwalb algorithm, see e.g. P. F. Felzenszwalb and D. P. Hut-tenlocher, "Efficient graph-based image segmentation", In: International journal of computer vision 59.2 (2004), pp. 167-181*.* Additionally or alternatively, the image segmentation may also be performed using AI-based computer vision techniques, e.g. using a neural network such as the U-Net, see e.g. O. Ronneberger, P. Fischer, and T. Brox, "U-Net: Convolutional networks for biomedical image segmentation", In: International Conference on Medical image computing and computerassisted intervention, Springer, 2015, pp. 234-241*,* the Mask R-CNN, see e.g. K. He, G. Gkioxari, P. Dollár, and R. Girshick, "Mask RCNN", In: Proceedings of the IEEE international conference on computer vision, 2017, pp. 2961-2969*,* and/or a pulse-coupled neural network, see e.g. M. Chen, X. Yu, and Y. Liu, "PCNN: Deep convolutional networks for short-term traffic congestion prediction", In: IEEE Transactions on Intelligent Transportation Systems 19.11 (2018), pp. 3550-3559*.* Depending on the depth-of-field of the quantitative phase-contrast microscope, aggregate analysis may be adapted to the needs on lateral resolution (e.g. highest for platelets) versus the aggregate height information depending on wavelength and numerical aperture. Histograms of aggregate size distribution and/or cellular composition can be plotted. e.g. in cases of assays using activating substances or detailed analysis of patient samples.

The method may further comprise determining one or more morphological parameters for some or all of the constituents of the cell aggregate, e.g. from the segmented image. The one or more morphological parameters may for example comprise a minimum diameter, a mean diameter, a maximum diameter, a circumference, an aspect ratio, a minimum phase shift, a mean phase shift, a maximum phase shift, a variation or standard deviation of the phase shift and/or a correlation length of the phase shift. The one or more morphological parameters may in particular comprise one or more texture features such as an entropy or homogeneity, an energy, one or more features extracted from a co-occurrence matrix such as a gray level co-occurrence matrix (GLCM) and/or one or more Haralick features. In some embodiments, the one or more morphological parameters may be extracted using AI-based computer vision techniques, e.g. using a neural network for feature extraction.

The method may also comprise determining the cell type of some or all of the constituents of the cell aggregate, e.g. based on the one or more morphological parameters. The cell type may for example be determined using one or more thresholds for the respective morphological parameters. Additionally or alternatively, the cell type may be determined using a regression analysis, a linear discriminant analysis, a decision tree classification a random forest classification, a support vector machine (SVM), a quadratic discriminant analysis, a K-means clustering, a logistic regression and/or a naive Bayes classifier. In some embodiments, the cell type may additionally or alternatively be determined using AI-based computer vision techniques, e.g. using a neural network-based classifier.

In a preferred embodiment, the method may also comprise identifying single cells in the one or more phase shift images, e.g. similar to the identification of cell aggregates described above. Single cells and cell aggregates may for example be distinguished based on one or more morphological parameters pertaining to their size, shape and/or structure, and/or may be distinguished using classical and/or AI-based computer vision techniques. The method may further comprise determining a cell type of the single cells, e.g. similar to the determination of the cell type for constituents of a cell aggregate described above.

The shear-thinning polymer may have a molecular weight between 3 MDa and 6 MDa in some embodiments, preferably a molecular weight between 3.5 MDa and 4.5 MDa, in one example a molecular weight of 4.0 MDa, with Da being the unified atomic mass unit (u). Increasing the molecular weight of the polymer may facilitate viscoelastic focusing of objects, but at the same time may also lead to an increase in the rate of polymer-induced formation of "artificial" cell aggregates as well as to increased mechanical stress on the cell aggregates due to interactions with the polymers in the suspension. The inventors have found that using a shear-thinning polymer with a molecular weight in these ranges is particularly advantageous for achieving sufficient confinement of both cell aggregates and single cells in the suspension even at low flow velocities and without inducing a formation of "artificial" cell aggregates. Preferably, the shear-thinning polymer is a linear polymer, e.g. a polymer comprising a single unbranched linear chain.

The mass fraction of the shear-thinning polymer in the suspension may be between 0.03% and 0.12% in some embodiments, preferably between 0.04% and 0.06%, in one example 0.05%. The mass fraction of a given constituent of the suspension may for example be defined as the ratio of the combined mass of the respective constituent in the suspension and the total mass of the suspension, i.e. the sum of the combined masses of each of the constituents of the suspension. Increasing the mass fraction of the shear-thinning polymer may facilitate viscoelastic focusing of objects, but at the same time may also lead to an increase in the rate of polymer-induced formation of "artificial" cell aggregates as well as to increased mechanical stress on the cell aggregates due to interactions with the polymers in the suspension. The inventors have found that using a shear-thinning polymer with a mass fraction in these ranges is particularly advantageous for achieving sufficient confinement of both cell aggregates and single cells in the suspension even at low flow velocities and without inducing a formation of cell aggregates.

Preferably, the shear-thinning polymer is a water soluble polymer. The shear-thinning polymer may for example be selected from the group consisting of poly(ethylene oxide) (PEO), poly(vinyl pyrrolidone) (PVP), hyaluronic acid (HA) and polyacrylamide (PAA). Preferably, the shear-thinning polymer is poly(ethylene oxide) or poly(vinyl pyrrolidone). In one example, the shear-thinning polymer is 4 MDa water soluble linear polymer PEO at a mass fraction of 0.05% in the suspension. In another example, the shear-thinning polymer is 4 MDa water soluble linear polymer PEO at a mass fraction of 0.2% in the suspension. In some embodiments, the viscoelastic fluid may comprise one or more additional shear-thinning polymers, wherein the additional shear thinning polymers may e.g. comprise a polymer of the same type, but with a different molecular weight (e.g. PEO with molecular weights distributed within a range of 3 MDa to 6 MDa) and/or a polymer of a different type with the same or a different molecular weight (e.g. PVP with a molecular weight of 2 MDa in addition to PEO with a molecular weight of 4 MDa). In such embodiments, a combined mass fraction of all shear-thinning polymers in the suspension may be less than 0.2%, preferably between 0.03% and 0.12%, in one example between 0.04% and 0.06%, and/or a molecular weight of some or all of the shear-thinning polymers may be within the range of 2 MDa and 10 MDa, preferably between 3 MDa to 6 MDa, in one example between 3.5 MDa and 4.5 MDa.

In a preferred embodiment, a flow velocity of the suspension along the microfluidic channel is chosen such that a shear stress within the flow is below 50 Pa, preferably below 10 Pa, in one example below 5 Pa. A shear rate within the flow of the suspension in the microfluidic channel, e.g. a gradient of the flow velocity, may for example be smaller than 10,000 s⁻¹, in some examples smaller than 5,000 s⁻¹, in one example smaller than 2,000 s⁻¹. A flow velocity of the suspension may for example be between 1 mm/ s and 1.0 m/s, preferably between 1 mm/s and 250 mm/s, in some examples between 5 mm/s and 100 mm/s, in one example between 8 mm/s and 64 mm/s.

In some embodiments, a length from an inlet of the microfluidic channel to a focal point of the quantitative phase-contrast microscope is between 30 mm and 60 mm, preferably between 35 mm and 50 mm. The inlet of the microfluidic channel may for example be an input port for providing the suspension to the microfluidic channel or a junction between two or more channels merging into the microfluidic channel, e.g. a hydrodynamic focusing junction. In some examples, the microfluidic channel may be straight or substantially straight, wherein the inlet of the microfluidic channel may for example also be a curved channel portion at the beginning of the microfluidic channel. Choosing a length of the microfluidic channel within the aforementioned ranges may for example facilitate a stable (viscoelastic) focusing even of smaller objects such as single cells and in particular platelets.

Preferably, a height of the flow of the suspension in a direction perpendicular to the focal plane of the quantitative phase-contrast microscope is between 30 µm and 100 µm, in some examples between 30 µm and 70 µm, in one example between 40 µm and 60 µm, e.g. 50 µm. The height of the flow of the suspension may for example be measured at the focal point of the quantitative phase-contrast microscope and may e.g. be the distance between sidewalls of the microfluidic channel that are in contact with the flow of the suspension, between interfaces between the flow of the suspension and one or more additional flows surrounding the flow of the suspension in the microfluidic channel or a combination thereof. The height of the flow of the suspension may for example be determined by a height of the microfluidic channel, which may e.g. be within the aforementioned ranges. Additionally or alternatively, the height of the flow of the suspension may also be controlled by hydrodynamic focusing by generating one or more sheath flows along the microfluidic channel, e.g. as described below. This may allow for generating a flow of the suspension having a height in the aforementioned ranges even in a microfluidic channel having a larger height. Choosing a height of the flow of the suspension within the aforementioned ranges may for example be advantageous to ensure a stable viscoelastic focusing of the cells and/or cell aggregates within the suspension.

In a preferred embodiment, the method further comprises generating two or more sheath flows along the microfluidic channel to hydrodynamically focus the flow of the suspension such that cell aggregates in the suspension are focused in a focal plane of the quantitative phase-contrast microscope. In other words, in addition to the viscoelastic focusing of cells and/or cell aggregates within the flow of the suspension, the flow of the suspension itself may be focused hydrodynamically by generating two or more sheath flows along the microfluidic channel. The sheath flows may for example be generated such that the sheath flows flow between the flow of the suspension and a respective sidewall of the microfluidic channel, e.g. such that the flow of the suspension is sandwiched between a pair of sheath flows flowing along opposing sidefaces of the microfluidic channel. The sheath flows may be configured to confine the flow of the suspension in one or more directions, e.g. a direction perpendicular to the focal plane of the microscope and/or a direction parallel to the focal plane of the microscope. Hydrodynamically focusing the flow of the suspension may for example allow for reducing the height of the flow of the suspension in the microfluidic channel and/or preventing objects within the flow of the suspension such as single cells and/or cell aggregates from coming in contact with sidewalls of the microfluidic channel. Hydrodynamic focusing may for example be used if the height of the microfluidic channel is larger than 100 µm, preferably if the height of the microfluidic channel is larger than 70 µm, in some examples if the height of the microfluidic channel is larger than 60 µm, in one example if the height of the microfluidic channel is larger than 50 µm. Additionally or alternatively, hydrodynamic focusing may also be used to control a position of the flow of the suspension within the microfluidic channel, e.g. to displace or offset the flow of the suspension from a center plane or a centerline of the microfluidic channel.

In combination, the viscoelastic focusing of cells and/or cell aggregates within the flow of the suspension and the hydrodynamic focusing of the flow of the suspension may be adapted such that cells and/or cell aggregates in the suspension are focused in the focal plane of the quantitative phase-contrast microscope. For example, the flow velocities and/or the flow rates of the two or more sheath flows may be chosen such that the flow of the suspension is hydrodynamically focused in a center region of the microfluidic channel and the viscoelastic fluid may lead to viscoelastic focusing of cells and/or cell aggregates at the center of the flow of the suspension, e.g. in the vicinity of the central plane or the centerline of the microfluidic channel. In some embodiments, the central plane and/or the centerline of the microfluidic channel may lie in the focal plane of the quantitative phase-contrast microscope. In other embodiments, cells and/or cell aggregates in the suspension may be focused in a different region of the microfluidic channel, e.g. in the vicinity of a plane or line that is offset from the central plane or the centerline of the microfluidic channel, for example by choosing asymmetric flow velocities or flow rates for the two or more sheath flows.

In some embodiments, some or all of the two or more sheath flows may comprise a viscoelastic fluid, in particular a viscoelastic fluid comprising the same shear-thinning polymer as the suspension. A mass fraction of the shear-thinning polymer in the respective sheath flows may for example be equal to or smaller than the mass fraction of the shear-thinning polymer in the suspension.

In some embodiments, the flow of the suspension is hydrodynamically focused by generating a pair of lateral sheath flows sandwiching the flow of the suspension in a first direction and a pair of vertical sheath flows sandwiching the flow of the suspension in a second direction perpendicular to the first direction, e.g. to confine the flow of the suspension along both the first and second directions. Each of the lateral sheath flows may for example flow between the flow of the suspension and a respective vertical sidewall of the microfluidic channel. Each of the vertical sheath flows may for example flow between the flow of the suspension and a bottom and top wall of the microfluidic channel, respectively. In other examples, the flow of the suspension may be hydrodynamically focused using only the pair of lateral sheath flows or only the pair of vertical sheath flows, e.g. to confine the flow of the suspension along the first or along the second direction by hydrodynamic focusing, whereas confinement of the cells and/or of the cell aggregates along the other direction may for example be achieved by viscoelastic focusing. The second direction may for example be perpendicular to the focal plane of the quantitative phase-contrast microscope and may e.g. be parallel to an imaging axis of the quantitative phase-contrast microscope.

In a preferred embodiment, the sample is a whole blood sample, e.g. unmodified blood extracted from a patient, or a blood fraction sample, e.g. a sample comprising one or more components of a whole blood sample such as blood plasma or fractions thereof, a buffy coat comprising leukocytes and platelets, and/or erythrocytes. In other examples, the sample may also be a sample of a different body fluid or a tissue sample extracted from a patient, in particular a tissue sample dissolved into single cells and/or into cell aggregates. The sample may e.g. be or comprise a human sample such as urine, effusions, lavage or sputum to perform cell aggregate tests thereon. In some examples, one or more coagulation-inhibiting substances, such as ethylenediamine tetra-acetic acid (EDTA), heparin or citrate, may be added to the whole blood sample or the blood fraction sample, respectively, to prevent coagulation.

Identifying cell aggregates in the one or more phase shift images may comprise identifying cell aggregates comprising or consisting of one or more predefined types of blood cells in the one or more phase shift images. Identifying cell aggregates in the one or more phase shift images may in particular comprise identifying platelet aggregates, i.e. aggregates consisting of platelets, leukocyte-platelet aggregates, i.e. aggregates consisting of one or more platelets and one or more leukocytes, and/or leukocyte aggregates, i.e. aggregates consisting of leukocytes. This may for example comprise identifying constituents of the cell aggregates in the one or more phase shift images, determining one or more morphological parameters for some or all of the constituents of the respective cell aggregates and determining the cell type of the respective constituents as described above. Additionally or alternatively, identifying cell aggregates in the one or more phase shift images may also comprise identifying cell aggregates comprising tumor cells, in particular cell aggregates comprising tumor cells and blood cells, for example cell aggregates consisting of tumor cells with platelets and/or leukocytes.

Additionally or alternatively, the method may also comprise determining a number of cell aggregates comprising at least a predefined number of cells of one or more certain types of cells, e.g. aggregates comprising at least a first number of cells of a first type or aggregates comprising at least the first number of cells of the first type and at least a second number of cells of a second type. In a preferred embodiment, the method comprises determining a number of leukocyte-platelet aggregates comprising at least a predefined number of leukocytes, in particular two or more leukocytes or three or more leukocytes. Additionally or alternatively, the method may for example also comprise determining a number of leukocyte aggregates and leukocyte-platelet aggregates comprising two or more leukocytes and/or of leukocyte-platelet aggregates comprising two or more leukocytes and two or more platelets. The method may also comprise determining a number of cell aggregates consisting of a predefined number of cells of one or more certain types of cells, e.g. aggregates consisting of a first number of cells of a first type, aggregates consisting of the first number of cells of the first type and a second number of cells of a second type, and/or aggregates consisting of the first number of cells of the first type and at least the second number of cells of the second type, for example a number of leukocyte-platelet aggregates consisting of two leukocytes and one or more platelets or a number of leukocyte-platelet aggregates consisting of three leukocytes and one or more platelets. Additionally or alternatively, the method may further comprise determining a number of cell aggregates comprising at least a predefined number of cells, e.g. three or more cells, in one example four or more cells. The method may in particular comprise determining a number of leukocyte aggregates and/or of leukocyte-platelet aggregates comprising three or more cells. The presence of cell aggregates of a certain composition, e.g. having at least a given number of cells, may be associated with a certain medical condition or disease. For example, the presence of leukocyte-platelet aggregates comprising two or more leukocytes and in particular the presence of leukocyte-platelet aggregates comprising three or more leukocytes may indicate an infection. High concentrations of platelet-platelet aggregates may for example indicate complications of Covid-19 patients or patients with cardiovascular diseases.

In some embodiments, preparing the suspension comprises diluting the whole blood sample or the blood fraction sample, respectively, by a factor between 1:10 and 1:1000, preferably between 1:50 and 1:200, in one example between 1:80 and 1:120. Diluting whole blood or a blood fraction by a factor in these ranges may ensure that the cells and the cell aggregates in the suspension are sufficiently sparse such that the respective objects can easily be distinguished in the phase shift images while also providing a sufficiently high density of objects to allow for an analysis of a large number of objects.

In a preferred embodiment, preparing the suspension does not comprise a lysis of erythrocytes, a sphering of platelets and/or of erythrocytes and/or a labelling or staining of cells. For example, preparing the suspension may only comprise adding the viscoelastic fluid to a blood sample, in particular a whole blood sample or a blood fraction sample, e.g. to dilute the blood sample by a factor within the ranges given above. This may enable a rapid processing of samples, e.g. to prevent spontaneous disintegration of cell aggregates from the sample. Furthermore, the aforementioned sample preparation procedures may affect cell morphology and/or may lead to the disintegration of cell aggregates from the sample. In some examples, one or more coagulation-inhibiting substances such as ethylenediamine tetra-acetic acid (EDTA) may be contained in the viscoelastic fluid and/or may be added to the blood sample.

In some embodiments, the method may further comprise adding a platelet- and/or leukocyte-activating substance to induce platelet aggregation and/or leukocyte-platelet aggregation, e.g. to study coagulation processes, or leukocyte function, e.g. to study morphological changes and aggregate formation. An increase or a decrease in a rate and/or in an extent of coagulation may for example be associated with certain pathological conditions. Samples from patients with coronary artery disease may e.g. exhibit stronger coagulation than samples from healthy individuals, see M. I. Furman et al., J. Am. Coll. Cardiol. Vol. 31, No. 3, 292-296 (2009*).* The platelet-activating substance may for example be selected from the group consisting of adenosine diphosphate (ADP), thrombin receptor activating peptide (TRAP), epinephrin, thrombin, Von-Willebrand-factor and C-reactive protein (CRP). Vice versa, inhibitors, such as Aspirin or Clopidogrel, can be added. Alternatively or in addition to platelet activation, leukocyte activating substances can be added, such as cytokines. Furthermore, drugs can be added, such as a checkpoint inhibitor, one or more antibody drug conjugates and/or one or more bispecific T-cell engaging antibody constructs, e.g. to study cell aggregation behavior and inhibition. In one example, the method may also comprise adding a substance that induces a formation of aggregates comprising tumor cells in combination with leukocytes and/or platelets.

According to the first aspect, the invention further provides a device for detecting cell aggregates of biological cells using a method according to any one of the embodiments according to the first aspect of the invention described herein. The device comprises a mount that is configured to receive a microfluidic system comprising a measurement volume. The device further comprises a microscope configured to take phase shift images of biological cells in the measurement volume. The device also comprises a microfluidics unit configured to receive a sample fluid comprising biological cells from a sample and a viscoelastic fluid, wherein the viscoelastic fluid comprises a shear-thinning polymer having a molecular weight between 2 MDa and 10 MDa and wherein a mass fraction of the shear-thinning polymer in the sample fluid is less than 0.2%. The microfluidics unit is configured to generate a flow of the sample fluid through the measurement volume to viscoelastically focus cell aggregates in the sample fluid flow in a focal plane of the microscope The device further comprises a controller that is configured to identify cell aggregates in a phase shift image of the sample fluid flow obtained from the microscope.

The mount may be configured to hold the microfluidic system, e.g. at a fixed reference position relative to the microscope. Preferably, the mount is configured to position the microfluidic system relative to the microscope, e.g. to move the microfluidic system along one or more directions and/or to tilt the microfluidic system around one or more axes. In some examples, the mount may further comprise one or more fluid connectors for interfacing ports of the microfluidic system, e.g. one or more input ports and an output port of the microfluidic system. The measurement volume of the microfluidic system may e.g. be a microfluidic channel or a portion thereof. In some embodiments, the device may comprise the microfluidic system.

The microscope is a quantitative phase-contrast microscope, e.g. a digital holographic microscope or a ptychographic imaging device, that is configured to take phase shift images, i.e. images that encode a phase shift of light at one or more wavelengths as a function of position. Preferably, the microscope is configured to determine an absolute value of the phase shift. In other examples, the microscope may only be configured to determine the phase shift modulo 2π. The microscope may for example be configured to obtain the phase shift through interference of light, e.g. between a probe or an imaging beam and a reference beam. In other examples, the microscope may be a ptychographic imaging device that is configured to perform ptychographic imaging without a reference beam, e.g. by recording interference patterns without a reference phase. The microscope may be configured to take one or more interference images and to reconstruct a phase shift image from the one or interference images.

In a preferred embodiment, the microscope is a digital holographic microscope, which is configured to take phase shift images as well as amplitude or intensity images, wherein an intensity image may encode an intensity of light as a function of position, e.g. an intensity of light reflected off or transmitted through an imaging sample such as the sample fluid flow as a function of the position in the imaging sample. The digital holographic microscope may for example be configured to interfere an image of the imaging sample, e.g. an imaging beam of light transmitted through the imaging sample, with a reference beam, wherein the reference beam may pass through the imaging sample or may not pass through the imaging sample. The digital holographic microscope may be configured to extract or reconstruct the phase shift and intensity images from one or more interference images, e.g. by reconstructing a wave front of light transmitted through or reflected off the imaging sample. The digital holographic microscope may be an on-axis digital holographic microscope, in which the imaging beam and the reference beam propagate along the same axis when interfering. Preferably, the digital holographic microscope is an off-axis digital holographic microscope, in which the imaging beam and the reference beam interfere under an angle and which may be configured to extract a phase shift image from a single interference image of the imaging sample. Such digital holographic microscopes are for example known from EP 1 524 491 A1 and EP 2 357 539 A1.

The microfluidics unit may for example comprise a reservoir for receiving the sample fluid and/or may comprise a slot for receiving a reservoir containing the sample fluid, e.g. a test or sample tube. The microfluidics unit may further comprise one or more fluid connectors for interfacing ports of the microfluidic system and/or ports of the mount. The microfluidics unit may further comprise one or more pressure sources such as pumps and/or one or more valves for generating the sample fluid flow and/or additional flows such as one or more sheath fluid flows.

The controller may be implemented in hardware, software or a combination thereof. The controller may for example comprise a processing device and a memory storing instructions for execution by the processing device to provide the functionality described herein. The controller may for example be configured to read-out one or more phase shift images from the microscope and to identify cell aggregates therein, e.g. as described above for the method according to the first aspect of the invention. The controller may further be configured to control some or all of the other components of the device, in particular the microfluidics unit and/or a sample preparation unit as described below. Preferably, the controller is configured to execute some or all of the steps of the method for detecting cell aggregates of biological cells according to one of the embodiments according to the first aspect of the invention described herein.

In a preferred embodiment, the microfluidic system further comprises a hydrodynamic focusing junction in fluid communication with the measurement volume. The hydrodynamic focusing junction may be configured to generate two or more sheath flows surrounding a sample fluid flow to hydrodynamically focus the sample fluid flow in the measurement volume. The microfluidics unit may be configured to provide a sheath fluid to the hydrodynamic focusing junction to hydrodynamically focus the sample fluid flow in the measurement volume such that cell aggregates in the sample fluid flow are focused in the focal plane of the microscope. At the hydrodynamic focusing junction, a sample channel, which may e.g. be configured to guide the sample fluid flow to the measurement volume, may intersect with two or more sheath flow channels, each of which may e.g. be configured to guide a respective one of the sheath flows to the measurement volume such that the corresponding sheath flow flows between the sample fluid flow and a respective wall of the measurement volume.

The device further comprises a sample preparation unit configured to provide the viscoelastic fluid comprising the shear-thinning polymer with a molecular weight between 2 MDa and 10 MDa to prepare the sample fluid comprising biological cells from the sample and the viscoelastic fluid, wherein the mass fraction of the shear-thinning polymer in the sample fluid is less than 0.2%. The sample preparation unit may for example comprise a reservoir for receiving the sample or a part thereof, e.g. a whole blood sample or a blood fraction sample, or a slot for receiving a reservoir containing the sample. The sample preparation unit may further comprise a reservoir for receiving the viscoelastic fluid and may be configured to mix the viscoelastic fluid and the sample or a part thereof, e.g. by adding the viscoelastic fluid to the sample or vice versa. In some examples, the sample preparation unit and the microfluidics unit may be integrated into a single unit.

Preferably, the sample preparation unit is configured to adjust a mass fraction of the shear-thinning polymer in the sample fluid, for example at least within a range between 0.03% and 0.12%, in some examples at least within a range between 0% and 0.2%. The sample fluid may for example be configured to adjust an amount of viscoelastic fluid added to the sample fluid, a concentration of the shear-thinning polymer in the viscoelastic fluid and/or an amount of another fluid, e.g. water or an aqueous solution, added to the sample fluid in addition to the viscoelastic fluid.

Additionally or alternatively, the sample preparation unit is configured to dilute the sample fluid by a factor between 1:10 and 1:1000, preferably between 1:50 and 1:200. Diluting the sample fluid by a given factor may e.g. refer to adding the viscoelastic fluid and/or other fluids to the sample or a part thereof in such amounts that the sample or a part thereof makes up the respective fraction of the sample fluid by mass or volume. In a preferred embodiment, the sample preparation unit is further configured to adjust the dilution factor, e.g. within the aforementioned ranges.

In some embodiments, the sample preparation unit is further configured to add one or more platelet-activating substances and/or one or more leukocyte-activating substances to the sample fluid and/or to the sheath fluid. The sample preparation unit may for example comprise a respective reservoir for each of the one or more platelet-activating substances and/or for each of the one or more leukocyte-activating substances and may be configured to add a predefined amount of one or more of these substances to the sample fluid and/or to the sheath fluid.

Preferably, the microfluidics unit is configured to control a flow velocity of the sample fluid flow in the measurement volume, wherein the flow velocity of the sample fluid flow may for example be between 1 mm/s and 1.0 m/s, preferably between 1 mm/s and 250 mm/s, in some examples between 5 mm/s and 100 mm/s, in one example between 8 mm/s and 64 mm/s. The microfluidics unit may for example be configured to adjust a flow rate of the sample fluid provided to the hydrodynamic focusing junction. The microfluidics unit may further be configured to adjust a flow rate of the sheath fluid provided to the hydrodynamic focusing junction, preferably such that a flow velocity or a flow rate of each of the two or more sheath flows can be controlled individually, e.g. to move or adjust a focusing region to which the sample fluid flow is confined by the sheath flows.

In a preferred embodiment, the controller is configured to execute some or all of the steps for analyzing a phase shift image described above for the method according to the first aspect of the invention. In particular, the controller may be configured to determine a number of cells in a cell aggregate identified in the phase shift image and/or a cell type of some or all of the cells in the cell aggregate identified in the phase shift image, e.g. as described above. The controller may be configured to identify platelet aggregates and/or leukocyte-platelet aggregates in the phase shift image. Preferably, the controller is further configured to determine a number of leukocyte-platelet aggregates comprising two or more leukocytes and/or a number of cell aggregates comprising three or more cells in the phase shift image, e.g. as described above.

### LIST OF FIGURES

In the following, a detailed description of the invention and exemplary embodiments thereof is given with reference to the figures. The figures show schematic illustrations of
Fig. 1: a device for detecting cell aggregates of biological cells according to an exemplary embodiment according to the first aspect of the invention;
Fig. 2: a microscope of the device of Fig. 1 in accordance with an exemplary embodiment according to the first aspect of the invention;
Fig. 3: a flow chart of a method for detecting cell aggregates of biological cells using a quantitative phase-contrast microscope according to an exemplary embodiment according to the first aspect of the invention;
Fig. 4: examples of phase shift images of single cells and cell aggregates obtained using a method according to an exemplary embodiment according to the first aspect of the invention;
Figs. 5a, 5b: an image segmentation for identifying constituents of cell aggregates in accordance with an exemplary embodiment according to the first aspect of the invention;
Fig. 6: an identification of platelet aggregates of different sizes in accordance with an exemplary embodiment according to the first aspect of the invention;
Figs. 7a, 7b: an analysis of the formation of aggregates induced by shear-thinning polymers in various concentrations;
Fig. 8: a flow chart of a method for detecting cellular and/or molecular biological objects using a quantitative phase-contrast microscope in accordance with an exemplary embodiment according to a second aspect of the invention;
Figs. 9a, 9b, 9c: a labelling of biological objects with marker objects to form composite aggregates in accordance with an exemplary embodiment according to the second aspect of the invention; and
Fig. 10: phase shift images of composite aggregates comprising T helper cells and marker objects obtained using a method in accordance with an exemplary embodiment according to the second aspect of the invention.

### DESCRIPTION OF THE PREFERRED EMBODIMENTS

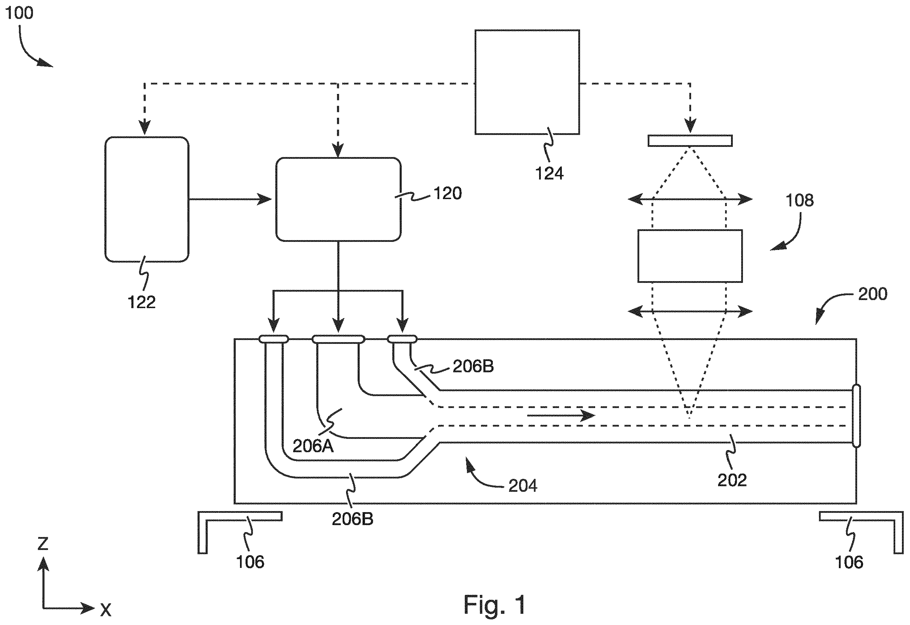

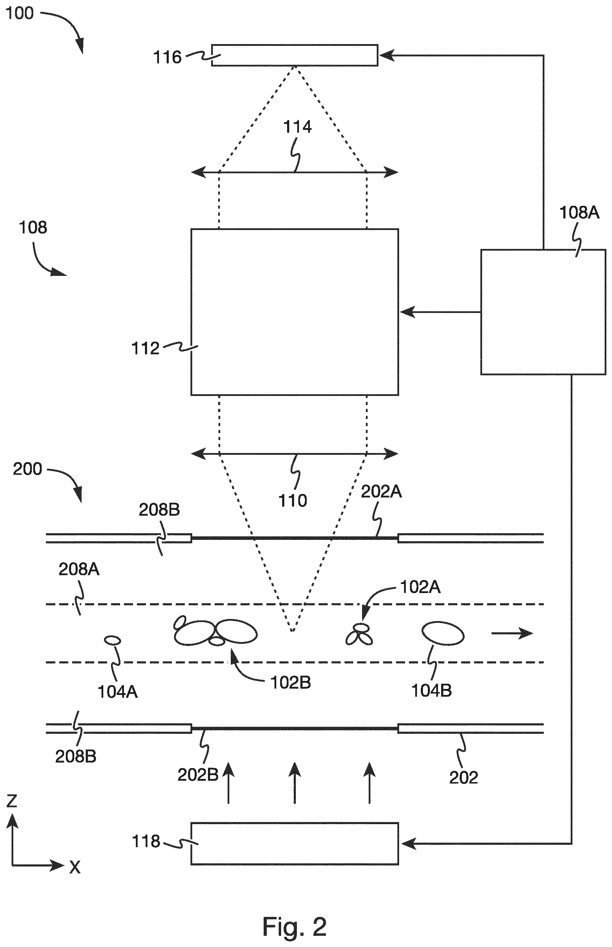

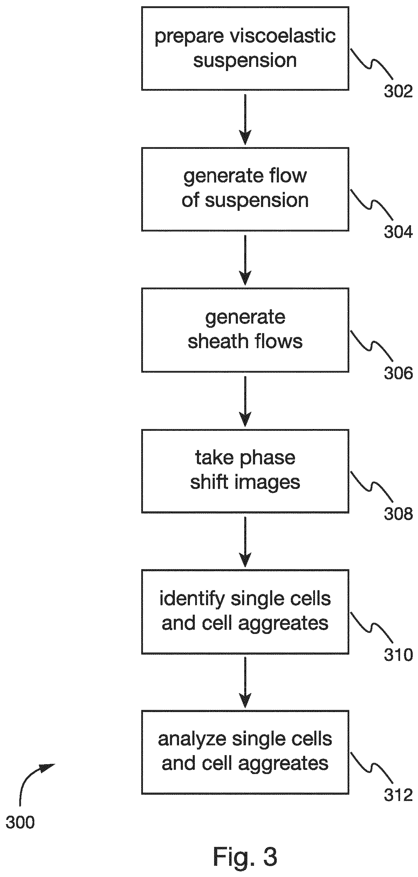

Fig. 1 shows a schematic illustration (not to scale) of a device 100 for detecting cell aggregates 102A, 102B (not shown) of biological cells 104A, 104B (not shown) according to an exemplary embodiment according to the first aspect of the invention. A schematic illustration (not to scale) of a microscope 108 of the device 100 is depicted in Fig. 2. The device 100 may be employed for performing a method for detecting cell aggregates according to any one of the embodiments according to the first aspect of the invention described herein, for example the method 300 described below with reference to Fig. 3.

The device 100 comprises a mount 106 that is configured to receive a microfluidic system 200, wherein the microfluidic system 200 comprises a measurement volume 202 and a hydrodynamic focusing junction 204. The measurement volume 202 and the hydrodynamic focusing junction 204 may for example be arranged in a substrate comprising one or more layers, each of which may e.g. comprise or consist of glass, plastic (in particular a transparent thermoplastic such as polymethyl methacrylate, PMMA), metal or a combination thereof.

The measurement volume 202 may for example be a microfluidic channel or a portion thereof and may for example have a width between 50 µm and 1000 µm in a direction of view of Figs. 1 and 2, a height between 30 µm and 500 µm in the Z direction of Figs. 1 and 2 and a length between 50 µm and 60 mm in the X direction of Figs. 1 and 2. In one example, the measurement volume 202 has a rectangular cross-section with a width between 300 µm and 700 µm, e.g. 500 µm, and a height between 30 µm and 100 µm, e.g. 50 µm. A distance between a center of the measurement volume 202, which may e.g. be aligned with a focal point of the microscope 108, and the hydrodynamic focusing junction 204 may for example be between 30 mm and 60 mm, in some examples between 35 mm and 50 mm, e.g. 40 mm. The measurement volume 202 comprises a detection window 202A, which may for example be a transparent sidewall of the measurement volume 202 or a part thereof or may be a transparent window arranged in a sidewall of the measurement volume 202. The detection window 202A is optimized for phase shift measurements. For example, a transmitted wavefront error of the detection window 202A may be less than λ/2, preferably less than λ/4, in one example less than λ/8. The detection window 202A may for example comprise or consist of a transparent thermoplastic, borosilicate glass and/or fused silica. The microfluidic system 200 further comprises an illumination window 202B for illuminating the measurement volume 202, wherein the illumination window 202B may e.g. be arranged on an opposite side of the measurement volume 202 as the detection window 202A as illustrated in Fig. 2 and preferably is also optimized for phase shift measurements.

At the hydrodynamic focusing junction 204, a sample channel 206A intersects with a plurality of sheath flow channels 206B such that a sample fluid flow 208A entering the measurement volume 202 from the sample channel 206A can be surrounded by two or more sheath flows 208B that flow between the sample fluid flow 208A and a respective wall of the measurement volume 202. In the example of Fig. 1, the microfluidic system 200 comprises two vertical sheath flow channels 206B that are configured to generate a pair of vertical sheath flows 208B sandwiching the sample fluid flow 208A in the Z direction of Figs. 1 and 2 in order to hydrodynamically focus the sample fluid flow 208A along the Z direction. The Z direction may for example be aligned with an optical axis of the microscope 108, i.e. may correspond to a direction perpendicular to a focal plane of the microscope 108. In addition, the microfluidic system 200 may also comprise two horizontal or lateral sheath flow channels (not shown) that are configured to generate a pair of horizontal or lateral sheath flows sandwiching the sample fluid flow 208A the direction of view of Figs. 1 and 2 in order to hydrodynamically focus the sample fluid flow 208A along the direction of view of Figs. 1 and 2.

In some embodiments, the microfluidic system 200 may not comprise the hydrodynamic focusing junction 204, e.g. in cases in which cell aggregates 102A, 102B and single cells 104A, 104B in the sample fluid flow 208A are only focused by viscoelastic focusing. In such examples, there may be no sheath flows in the measurement volume 204 and the sample fluid flow 208A may extend over the entire height of the measurement volume 202, e.g. from a bottom wall comprising the illumination window 202B to a top wall comprising the detection window 202A. To provide sufficient confinement of the cell aggregates 102A, 102B and single cells 104A, 104B in the sample fluid flow 208A, a measurement volume 202 having a smaller height may e.g. be used in these cases. The height of the measurement volume 202 may for example be between 30 µm and 70 µm, in some examples between 40 µm and 60 µm, e.g. 50 µm.

The mount 106 is configured to hold the microfluidic system 200 at a fixed reference position relative to the microscope 108. The mount 106 may also be configured to position the microfluidic system 200 relative to the microscope 108, e.g. to move the microfluidic system 200 along one or more directions and/or to tilt the microfluidic system 200 around one or more axes, e.g. to align a central plane or a centerline of the measurement volume 202 with the focal plane of the microscope 108.

The microscope 108 of the device 100 is a quantitative phase-contrast microscope, in particular a digital holographic microscope that is configured to take phase shift images and intensity images of the sample fluid flow 208A in the measurement volume 202 through the detection window 202A. For this, the microscope 108 comprises an imaging system with an objective 110, a holographic imaging system 112 and an imaging lens 114, wherein the imaging system is configured to image the focal plane of the microscope 108 onto a camera 116, which may for example be a CCD or CMOS camera. The microscope 108 also comprises an illumination source 118 that is configured to illuminate the measurement volume 202 through the illumination window 202B. The microscope 108 further comprises a microscope controller 108A for controlling the holographic imaging system 112, the camera 116 and/or the illumination source 118.

The objective 110 may for example be a high-NA objective having a numerical aperture larger than 0.4, in some examples larger than 0.5. A depth of field of the objective 110 may be smaller than 10 µm, preferably smaller than 5 µm, in one example between 2 µm and 3 µm, wherein the depth of field may e.g. be defined as a minimum Rayleigh length of a laser beam focused by the objective 110, for example at a wavelength of 1064 nm. This may allow for precise focusing on objects such as the cell aggregates 102A, 102B in the measurement volume 202 and may provide sufficient spatial resolution to resolve morphological features of individual cells.

The holographic imaging system 112 is configured to create an interference image on the camera 116, e.g. by interfering an imaging beam with a reference beam on the camera 116. The imaging beam may for example be a beam that passes through the measurement volume 202 and propagates from the focal plane of the microscope 108 to the camera 116 along a first optical path through the holographic imaging system 112. The reference beam may for example be a beam propagating to the camera 116 along a second optical path through the holographic imaging system 112. In some examples, the reference beam may be split from the imaging beam, e.g. using a beam splitter or a diffraction grating, i.e. the reference beam may also have passed through the measurement volume 202 and may propagate to the camera 116 from the focal plane of the microscope 108 along the second optical path. In other examples, the reference beam may not have passed through the measurement volume 202 and may e.g. be split from the imaging beam in front of the measurement volume 202.

The digital holographic microscope 108 may be an on-axis digital holographic microscope, in which the imaging beam and the reference beam propagate along the same axis when interfering, i.e. interfere at an angle of 0°. The microscope controller 108A may for example be configured to extract or reconstruct a phase shift image as well as an intensity image of the sample fluid flow 208A in the measurement volume 202 from a plurality of interference images, e.g. by varying a phase offset between the reference and imaging beams using the holographic imaging system 112. Preferably, the microscope 108 is an off-axis digital holographic microscope, in which the imaging beam and the reference beam interfere under an angle. In this case, the microscope controller 108A may be configured to extract or reconstruct the phase shift image as well as the intensity image of the sample fluid flow 208A from a single interference image. Alternatively, the microscope 108 may be a ptychographic imaging device and analysis of ptychographic images may be performed to classify cell aggregates.

The illumination source 118 is configured to illuminate the measurement volume 202 by spatially and/or temporally coherent light, wherein a coherence length of the illumination light may for example be larger than a field of view of the microscope 108 and a coherence time of the illumination light may for example be larger than a time delay between the image and reference beams, i.e. such that an interference pattern can be observed on the camera 116. The illumination source 108 may for example comprise a laser or a light-emitting diode and may be configured to emit monochromatic light, e.g. at a wavelength between 500 nm and 1100 nm.

The microscope controller 108A may be implemented in hardware, software or a combination thereof. The microscope controller 108A may be configured to provide the phase shift and intensity images to another device, in particular to the controller 124 of the device 100, and may be controlled by another device such as the controller 124. In some examples, the microscope controller 108A or a part thereof may be integrated into the controller 124. In addition to reconstructing the phase shift and intensity images, the microscope controller 108A may also be configured to analyze the phase shift and/or intensity images, e.g. as detailed below for method 300.

The device 100 further comprises a microfluidics unit 120 and a sample preparation unit 122, which in some embodiments may be integrated into a single unit. The sample preparation unit 122 is configured to receive a liquid sample comprising biological cells, e.g. in a test tube. The liquid sample may in particular be a whole blood sample, which comprises single cells such as platelets 104A, white blood cells (leukocytes) 104B as well as red blood cells (not shown). The whole blood sample may further comprise aggregates of blood cells such as platelet aggregates 102A consisting of a plurality of platelets, leukocyte-platelet aggregates 102B consisting of one or more platelets and one or more leukocytes and/or leukocyte aggregates (not shown) consisting of a plurality of leukocytes. In other examples, the liquid sample may also be a blood fraction sample, e.g. a sample comprising one or more components of a whole blood sample. The sample preparation unit 122 is configured to prepare a sample fluid comprising biological cells from the sample by adding a viscoelastic fluid to the sample, e.g. as described below for method 300.

The microfluidics unit 120 is configured to receive the sample fluid from the sample preparation unit 122 and is configured to generate the sample fluid flow 208A through the measurement volume 202 by providing the sample fluid to an inlet of the sample channel 206A. The microfluidics unit 120 is further configured to generate the sheath fluid flows 208B for hydrodynamically focusing the sample fluid flow 208A by providing a sheath fluid to inlets of the sheath flow channels 206B. The microfluidics unit 120 may for example comprise a respective reservoir for the sample fluid and the sheath fluid as well as one or more pumps for providing the sample fluid and the sheath fluid to the respective inlets of the microfluidic system 200.

The device 100 comprises a controller 124 that is configured to control the microscope controller 108A, the microfluidics unit 120 and/or the sample preparation unit 122. The controller 124 is further configured to analyze phase shift images obtained from the microscope 108 and in particular to identify cell aggregates such as the cell aggregates 102A, 102B therein, e.g. as described below for method 300. Preferably, the controller 124 is configured to execute the method 300 at least in part. The controller 124 may be implemented in hardware, software or a combination thereof. The controller 124 may for example comprise a processing device (not shown) and a memory (not shown) storing instructions for execution by the processing device to provide the functionality described herein. The controller 124 may for example comprise a central processing unit (CPU), a graphics processing unit (GPU), a field programmable gate array (FPGA), an application-specific integrated circuit (ASIC) and/or a microcontroller.

Fig. 3 shows a flow chart of a method 300 for detecting cell aggregates of biological cells using a quantitative phase-contrast microscope according to an exemplary embodiment according to the first aspect of the invention. The method 300 may e.g. be used to detect the presence of cell aggregates in a sample such as a whole blood sample, which is used as a non-limiting example for illustrative purposes in the following. In other examples, the sample may e.g. be a blood fraction sample. The method 300 may for example be implemented with the device 100 and the microfluidic system 200 of Figs. 1 and 2, which are used as examples for illustration purposes in the following. This is, however, not intended to be limiting in any way and the method 300 may also be implemented using a different device with a quantitative phase-contrast microscope and/or using a different microfluidic system. Furthermore, the method 300 is not limited to the order of execution shown in the flowchart of Fig. 3. As far as technically feasible, the method 300 may be executed in an arbitrary order and parts thereof may be executed simultaneously at least in part, for example steps 304 to 308.

In step 302, a suspension is prepared which comprises a viscoelastic fluid and biological cells from the sample such as the single cells 104A, 104B and the cell aggregates 102A, 102B. The suspension, which may also be referred to as the sample fluid in the following, may for example be prepared using the sample preparation unit 122 of the device 100, e.g. by adding the viscoelastic fluid to the whole blood sample or vice versa in a reservoir of the sample preparation unit 122. The viscoelastic fluid comprises a linear water soluble shear-thinning polymer such as poly(ethylene oxide) (PEO) or poly(vinyl pyrrolidone) (PVP), wherein the molecular weight of the shear-thinning polymer is between 2 MDa and 10 MDa, preferably between 3.5 MDa and 4.5 MDa, e.g. 4.0 MDa. The sample fluid is prepared such that a mass fraction of the shear-thinning polymer in the sample fluid is less than 0.2%, preferably between 0.04% and 0.06%, for example 0.05%. In the sample fluid, the whole blood sample may be diluted by a factor between 1:50 and 1:200, for example by a factor of 1:100, e.g. by adding an appropriate amount of the viscoelastic fluid and/or of another fluid such as water or an aqueous solution.

Preparing the suspension in step 302 preferably does not comprise any of a lysis of erythrocytes, a sphering of platelets and erythrocytes and a labelling or staining of cells. In some embodiments, a coagulation-inhibiting substance such as ethylenediamine tetra-acetic acid (EDTA) may be added to the whole blood sample to prevent coagulation, e.g. prior to or when preparing the sample fluid. In some examples, a platelet-activating substance such as thrombin receptor activating peptide (TRAP) may be added to the whole blood sample or to the sample fluid.

In step 304, a flow 208A of the sample fluid containing the single cells 104A, 104B and the cell aggregates 102A, 102B is generated through the measurement volume 202 of the microfluidic system 200, e.g. using the microfluidics unit 120. As a result of the shear thinning induced by the shear-thinning polymer, the viscoelastic fluid may exert hydrodynamic forces on the single cells 104A, 104B and the cell aggregates 102A, 102B in the sample fluid flow 208A. This may induce a motion perpendicular to a direction of flow such that the single cells 104A, 104B and the cell aggregates 102A, 102B are focused viscoelastically in a center region of the sample fluid flow 208A, which may be aligned with a focal plane of the microscope 108.

Simultaneously, two or more sheath flows 208B may be generated through the measurement volume 202 in step 306 to hydrodynamically focus the sample fluid flow 208A in addition to the viscoelastic focusing, e.g. by providing a sheath fluid to inlets of the sheath flow channels 206B of the microfluidic system 200. A pair of vertical sheath flows 208B may sandwich the sample fluid flow 208A in the Z direction of Figs. 1 and 2 and a pair of horizontal sheath flows may sandwich the sample fluid flow 208A in the direction of view of Figs. 1 and 2, thereby confining the sample fluid flow 208A in two orthogonal directions. By adjusting the flow rates of the sheath flows 208B, a position of the sample fluid flow 208A in the measurement volume 202 may be controlled, e.g. such that the sample fluid flow 208A flows along a centerline of the measurement volume 202 and the single cells 104A, 104B and cell aggregates 102A, 102B contained therein are focused in the focal plane of the microscope 108. In some embodiments, the shear-thinning polymer contained in the viscoelastic fluid may also be added to the sheath fluid for the sheath fluid flows, e.g. such that the sheath fluid also becomes a shear-thinning fluid. In some examples, the method 300 may not comprise generating the sheath flows 208B in step 306, but the single cells 104A, 104B and cell aggregates 102A, 102B in the sample fluid flow 208A may e.g. be focused in the focal plane of the microscope 108 by viscoelastic focusing only. For example, no sheath fluid may be provided to the sheath flow channels 206B or a microfluidic system 200 without the sheath flow channels 206B and the hydrodynamic focusing junction 204 may be used. A height of the measurement volume 202 along the Z direction of Fig. 2 may be chosen accordingly and may for example be between 30 µm and 70 µm, in some examples between 40 µm and 60 µm, e.g. 50 µm.

In order to avoid damaging the cell aggregates 102A, 102B, the flow velocities of the sample fluid flow 208A and of the sheath flows 208B are chosen such that a shear stress that the cell aggregates 102A, 102B are exposed to in the sample fluid flow 208A is less than 50 Pa, preferably less than 10 Pa, e.g. by adjusting the flow rates through the sample channel 206A and the sheath flow channels 206B accordingly. The flow rates may for example be chosen such that the flow velocity of the sample fluid flow 208A in the measurement volume 202 is between 5 mm/s and 100 mm/s, in one example between 8 mm/s and 64 mm/s.

While the sample fluid flow 208A flows through the measurement volume 202, one or more phase shift images of the single cells 104A, 104B and the cell aggregates 102A, 102B in the sample fluid flow 208A are taken with the microscope 108. The dilution factor of the sample in the sample fluid may for example be chosen such that each phase shift image contains between 5 and 50 single cells or cell aggregates in order to facilitate distinguishing the single cells and cell aggregates from each other. Preferably, a sequence of phase shift images is taken, for example with a frame rate between 10 frames per second and 200 frames per second. This may allow for analyzing a large number of single cells and cell aggregates in a short amount of time and thus facilitates the detection of types of cell aggregates that rarely occur in the sample.

In steps 310 and 312, the phase shift images taken in step 308 are analyzed, e.g. using the microscope controller 108A and/or the controller 124 of the device 108. This comprises identifying cell aggregates 102A, 102B as well as single cells 104A, 104B in the respective phase images in step 310. Cell aggregates and single cells may for example be distinguished based on a combination of morphological parameters such as a mean diameter and a maximum phase shift, for example by defining corresponding regions in the parameter space spanned by the morphological parameters, e.g. using one or more thresholds for the respective parameters. Additionally or alternatively, cell aggregates may also be identified using computer vision techniques such as a neural network-based classifier. Step 310 may also comprise determining a total number of single cells, a total number of cell aggregates and/or a fraction of cell aggregates, i.e. the ratio of the total number of cell aggregates to the total number of single cells and cell aggregates.

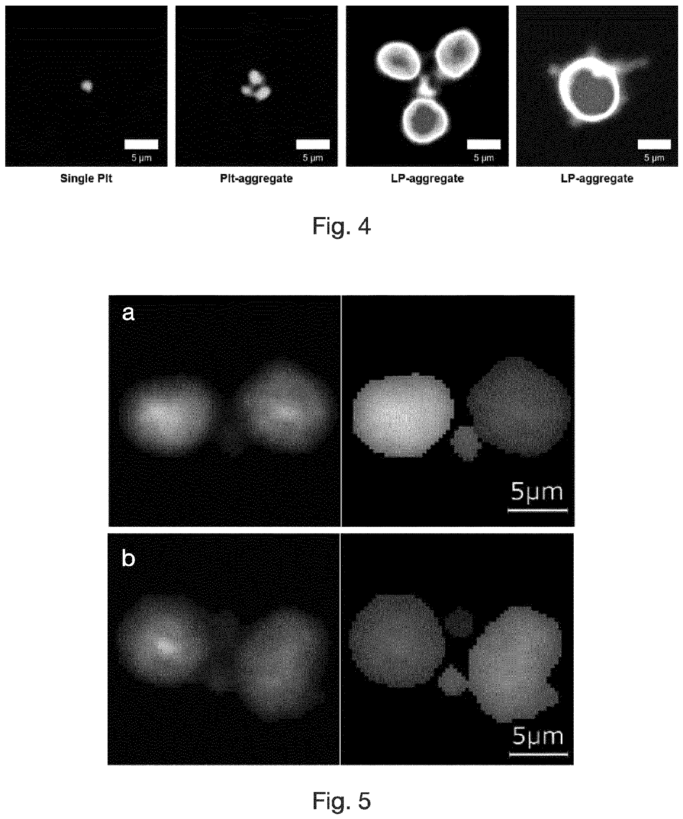

In step 312, the single cells 104A, 104B and the cell aggregates 102A, 102B identified in step 310 may be analyzed further. This may in particular comprise determining a number of cells in the cell aggregates 102A, 102B as well as determining a cell type of the single cells 104A, 104B and a cell type of the cells in the cell aggregates 102A, 102B. To determine the number of cells in a cell aggregate 102A, 102B, constituents of the cell aggregate 102A, 102B may be identified by performing an image segmentation on a portion of the phase shift image associated with the cell aggregate 102A, 102B, e.g. using a watershed algorithm as detailed below with reference to Fig. 5. Subsequently, one or more morphological parameters may be determined for the constituents of the cell aggregates 102A, 102B as well as for the single cells 104A, 104B in order to determine the cell type of the constituents of the cell aggregates 102A, 102B and of the single cells 104A, 104B. The cell type may for example be determined by defining corresponding regions in the parameter space spanned by the morphological parameters. In other examples, the cell type may e.g. be determined using a regression analysis, a linear discriminant analysis, a decision tree classification, a random forest classification and/or a neural network-based classifier.

Step 312 may in particular be used to identify platelet aggregates, leukocyte-platelet aggregates and/or leukocyte aggregates in the phase shift images, e.g. to determine a total number or fraction of the respective aggregates in the phase shift images. Step 312 may also comprise determining a number or fraction of leukocyte-platelet aggregates comprising two or more leukocytes and/or a number or fraction of leukocyte-platelet aggregates and/or platelet aggregates comprising three or more cells, e.g. as an indicator for a bacterial infection.

Fig. 4 depicts four examples of phase shift images of single cells and cell aggregates obtained using a method according to an exemplary embodiment according to the first aspect of the invention such as the method 300. The images were obtained from a diluted and stabilized whole blood sample of a patient in surgical intensive care. As a preanalytical step, the blood sample was diluted with the factor 1:100 in a viscoelastic polymer solution. The polymer solution was composed of 99.95% phosphate buffered saline (PBS) and 0.05% of PEO (4 MDa). During the measurement, a total flow rate of 1.6 µl/s and a sample flow rate of 0.2 µl/s was used. The image on the left contains a single platelet, the center-left image contains a platelet aggregate consisting of three platelets, the center-right image contains a leukocyte-platelet aggregate consisting of three leukocytes and a plurality of platelets and the image on the right contains a leukocyte-platelet aggregate consisting of a single leukocyte and a plurality of platelets.

Fig. 5a, 5b illustrate examples for an image segmentation to identify constituents of cell aggregates in accordance with an exemplary embodiment according the first aspect of the invention, wherein Fig. 5a shows an example for a leukocyte-platelet aggregate consisting of two leukocytes and a single platelet and Fig. 5b shows an example for a leukocyte-platelet aggregate consisting of two leukocytes and two platelets. The plots on the left show the respective phase shift images and the plots on the right depict the outcome after segmentation of the phase shift images. The segmentation was performed via watershed segmentation using an inverse distance transform. The inversed version of the standard transform results in high intensity at the cell boundaries and low intensity in the middle of the cells. In this case, the local minima in the inverse distance map ideally correspond to the centroids of the cells and is robust to high gradients in the cell's interior.

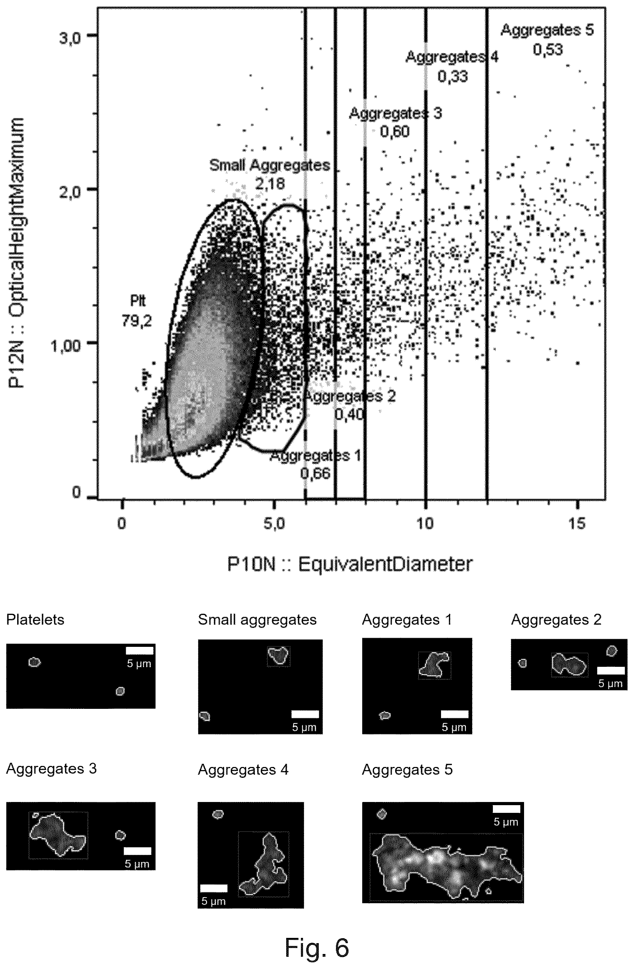

Fig. 6 illustrates the identification of single cells and platelet aggregates of different sizes in accordance with an exemplary embodiment according to the first aspect of the invention. For this, two morphological parameters of the single cells and cell aggregates were extracted from the phase shift images, namely the mean diameter (equivalent diameter) and the maximum phase shift (optical height maximum) plotted on the X and Y axis, respectively, of the plot on the left. In this parameter space, a plurality of regions were defined as illustrated by the solid black lines in the plot on the left, each of which corresponds to aggregates of a certain size, namely single platelets (left-most region), "small aggregates" (second region from the left), "aggregates 1" (third region from the left), "aggregates 2" (fourth region from the left), "aggregates 3" (third region from the right), "aggregates 4" (second region from the right) and "aggregates 5" (right-most region). Fig. 6 provides an example of a simple and easy to implement method of analyzing phase contrast images of single cells and cell aggregates. This analysis only relies on two morphological parameters, which moreover can be obtained easily from the phase contrast images and are robust with regard to variations in image quality. Even though the information conveyed by these two morphological parameters is not sufficient to allow for determining the number of platelets in the aggregates, it nonetheless provides a fast and efficient way of classifying platelet aggregates by size, e.g. to determine a histogram of the aggregate size distribution. Additional information such as the number of platelets per aggregate may for example be obtained by determining additional morphological parameters and/or using a neural-network based classifier, e.g. the Mask R-CNN, cf. K. He, G. Gkioxari, P. Dollár, and R. Girshick, "Mask RCNN", In: Proceedings of the IEEE international conference on computer vision, 2017, pp. 2961-2969*.*

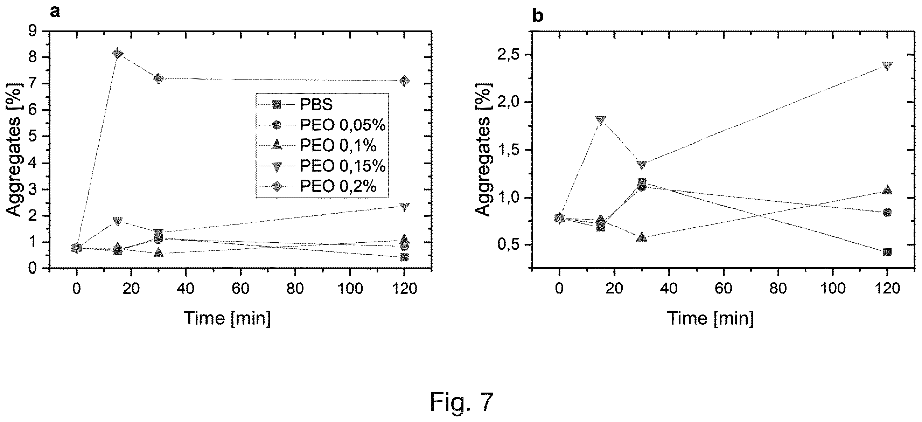

Figs. 7a, 7b show the results of experiments studying the effect of shear-thinning polymers on the formation of platelet aggregates, wherein Fig. 7b is an enlarged version of the lower portion of Fig. 7a. For this, a suspension comprising a thrombocyte concentrate and a viscoelastic fluid containing poly(ethylene oxide) (PEO) with a molecular weight of 4 MDa and phosphate buffered saline (PBS) was prepared and the fraction of platelet aggregates was determined as a function of time for various concentrations of PEO in the suspension. As a reference, the same experiment was conducted with a suspension comprising a whole blood sample and phosphate buffered saline (PBS) only, i.e. without adding PEO. At PEO mass fractions of 0.05% and 0.1%, no significant formation of additional platelet aggregates over the PBS reference was observed. At a PEO mass fraction of 0.15%, a slight increase in the fraction of platelet aggregates was observed, while a PEO mass fraction of 0.2% already leads to a substantial increase in the fraction of platelet aggregates. This highlights the importance of choosing an appropriate mass fraction of the shear-thinning polymer in the suspension in order to avoid affecting the result of the measurements by polymer-induced formation of cell aggregates.

The method for detecting cell aggregates of biological cells according to the first aspect of the invention may comprise some or all of the features and/or steps of the method for detecting cellular and/or molecular biological objects according to the second aspect of the invention described below. The device for detecting cell aggregates of biological cells according to the first aspect of the invention may comprise some or all of the features and/or components of the device for detecting cellular and/or molecular biological objects according to the second aspect of the invention described below.

The present inventors have further found that a viscoelastic fluid as described above is particularly suitable also for focusing objects other than cell aggregates, in particular for focusing composite objects comprising two or more constituents that are bound or adhere to each other. As detailed above, viscoelastic focusing of objects in a suspension comprising a shear-thinning polymer having a molecular weight between 2 MDa and 10 MDa at a mass fraction in the suspension of less than 0.2% may allow for a reliable focusing of objects of various sizes (e.g. composite objects and non-composite objects) while reducing mechanical stress on the objects, thus preventing damage to or disintegration of the composite objects.

As such, a viscoelastic fluid as described above may for example be used for focusing objects, in particular biological objects, that are labelled with a marker object such as an imaging marker. The marker object may for example be configured to selectively bind to a certain type of object (e.g. to a certain type of cell) and may have characteristic geometric and/or optical properties that allow for distinguishing different types of objects (e.g. different types of cells) in an image. Conventional imaging markers may for example have characteristic spectral properties such as characteristic absorption and/or emission spectra (as e.g. employed in fluorescent imaging markers). Alternatively, imaging markers may be distinguished based on their size or their absorption properties such as a transmittance, see e.g. H. Im et al., PNAS vol. 112, no. 18, 5613-5618 (2015*).*

Phase shift images obtained with a quantitative phase-contrast microscope may contain more morphological information than for example intensity images obtained with a conventional bright-field microscope and may thus allow for distinguishing different types of cells (e.g. different types of blood cells such as erythrocytes, leukocytes and platelets) without the use of imaging markers, i.e. label-free. Certain types or subtypes of cells, however, may exhibit a very similar morphology and may thus be challenging to distinguish even in phase shift images. This for example applies to subtypes of lymphocytes and in particular to subtypes of T cells. Other objects such as molecular objects (e.g. proteins) may be too small to resolve structural or morphological features of such objects in microscopic images. Therefore, even when using quantitative phase-contrast microscopes, the use of markers objects may be advantageous for certain applications to enable a reliable detection, in particular for automated high-throughput analyses in a clinical setting.

It is thus a further object of the invention to provide a method that allows for a fast and reliable detection of cellular and molecular biological objects and is suitable for performing automated high-throughput analyses in a clinical setting.

This object is met by a method for detecting cellular and/or molecular biological objects using a quantitative phase-contrast microscope according to claim 10 and a device for detecting cellular and/or molecular biological objects according to claim 14. Embodiments thereof are detailed in the corresponding dependent claims.

According to a second aspect of the invention, a method for detecting cellular and/or molecular biological objects using a quantitative phase-contrast microscope is provided. The method comprises labelling biological objects from a sample with marker objects to form composite aggregates, wherein each of the composite aggregates comprises one or more of said biological objects and one or more of said marker objects. A suspension is prepared, wherein the suspension comprises composite aggregates and a viscoelastic fluid. The viscoelastic fluid comprises a shear-thinning polymer having a molecular weight between 2 MDa and 10 MDa, wherein a mass fraction of the shear-thinning polymer in the suspension is less than 0.2%. A flow of the suspension is generated along a microfluidic channel to viscoelastically focus composite aggregates in the suspension in a focal plane of the quantitative phase-contrast microscope. One or more phase shift images of biological objects and/or composite aggregates in the suspension are taken using the quantitative phase-contrast microscope and composite aggregates are identified in the one or more phase shift images.

The method for detecting cellular and/or molecular biological objects according to the second aspect of the invention may further comprise some or all of the features and/or steps of the method for detecting cell aggregates of biological cells according to the first aspect of the invention according to any one of the embodiments described herein.

In particular, the suspension, the viscoelastic fluid and/or the shear-thinning polymer may have similar or identical properties as described above for the method according to the first aspect of the invention. For example, the shear-thinning polymer may have a molecular weight between 3 MDa and 6 MDa in some embodiments, preferably a molecular weight between 3.5 MDa and 4.5 MDa, in one example a molecular weight of 4.0 MDa. Additionally or alternatively, the mass fraction of the shear-thinning polymer in the suspension may be between 0.03% and 0.12%, preferably between 0.04% and 0.06%, in one example 0.05%. The shear-thinning polymer may be a water soluble polymer and may for example be selected from the group consisting of poly(ethylene oxide) (PEO), poly(vinyl pyrrolidone) (PVP), hyaluronic acid (HA) and polyacrylamide (PAA). Preferably, the shear-thinning polymer is poly(ethylene oxide) or poly(vinyl pyrrolidone).

The biological objects that are labelled with the marker objects may be or comprise cellular biological objects such as single cells and/or cell aggregates, in particular blood cells and/or aggregates thereof. Some or all of said biological objects may each for example be a cellular biological object, but may also contain additional constituents in some examples (i.e. may comprise a cellular biological object). A cell aggregate may for example be a cluster of cells adhering to each other. The cell aggregate may e.g. comprise between 2 and 100 cells, in some examples between 2 and 20 cells, in one example between 2 and 10 cells.

Additionally or alternatively, the biological objects that are labelled with the marker objects may be or comprise molecular biological objects (e.g. biomolecules), in particular biological macromolecules such as proteins and/or nucleic acids. Some or all of said biological objects may each for example be a molecular biological object, but may also contain additional constituents in some examples (i.e. may comprise a molecular biological object).

The method according to the second aspect of the invention may also be used for detecting cell aggregates as detailed above for the method according to the first aspect of the invention. The cell aggregates may be the biological objects that are to be detected (e.g. may be labelled using the marker objects) or may be detected in addition to said biological objects. The method may for example be used for detecting labelled biological objects (e.g. labelled macromolecules, labelled single cells and/or labelled cell aggregates) as well as for detecting non-labelled and/or labelled cell aggregates. Put differently, the methods according to the first and second aspects of the invention may be combined for detecting (labelled) cellular and/or molecular biological objects and (labelled and/or non-labelled) cell aggregates. The suspension may comprise biological cells from the sample, e.g. in the form of the composite aggregates and/or in addition to the composite aggregates. The flow of the suspension may be generated such that composite aggregates as well as cell aggregates (and optionally single cells) are focused in the focal plane of the quantitative phase-contrast microscope. In the one or more phase shift images, composite aggregates as well as (labelled and/or non-labelled) cell aggregates (and optionally labelled and/or non-labelled single cells) may be identified.

The marker objects are not particularly limited and may be or comprise any type of object that can be identified in a phase shift image and/or in an intensity image, e.g. distinguished from other objects in the respective image. The marker objects may for example have characteristic geometric properties (e.g. a characteristic size and/or shape) and/or characteristic optical properties (e.g. a characteristic transmittance, a characteristic reflectivity, a characteristic absorption and/or emission spectrum and/or a characteristic refractive index and/or phase shift). In some embodiments, the marker objects may for example be or comprise fluorescent imaging markers, e.g. fluorophore-labelled antibodies, quantum dots and/or nitrogen-vacancy centers.

Preferably, the marker objects are or comprise microbeads, i.e. particles having a size of less than 1 mm. The microbeads may for example be ellipsoidal and/or substantially ellipsoidal particles, in particular spherical and/or substantially spherical particles. The microbeads may for example have a characteristic size, a characteristic transmittance and/or may be associated with a characteristic phase shift (e.g. as a result of a characteristic size and refractive index) that allows for identifying the microbeads in an image, in particular in a phase shift image. In some embodiments, the microbeads may not be fluorescent and/or may be transparent (i.e. may not absorb light at the wavelength used for obtaining the phase shift images).

The microbeads may each have a physical dimension (e.g. a length, a width and/or a height), in particular a diameter, of between 0.5 µm and 100 µm, preferably of between 0.5 µm and 30 µm, in some examples of between 1 µm and 20 µm, in one example of between 2 µm and 10 µm. The microbeads may comprise or consist of a material having a refractive index n (i.e. the real part of the complex refractive index, which determines the phase velocity and thus the phase shift) that is substantially different from that of water (n ≈ 1.33) and/or larger than a typical refractive index of erythrocytes (n ≈ 1.418). The microbeads may for example comprise or consist of a material having a refractive index of at least 1.4, in some examples of at least 1.45, in some examples of at least 1.5, preferably of at least 1.6, in one example of at least 1.7 and in one example of at least 2.0. Additionally or alternatively, the microbeads may for example comprise or consist of a material having a refractive index of no more than 1.1, preferably of no more than 0.9, in one example of no more than 0.6. The microbeads may for example comprise or consist of a polymer material such as polystyrene, a metal such as gold and/or silver, and/or glass such as fused silica. In some embodiments, the marker objects may also be or comprise nanoparticles, i.e. particles having a size of less than 1 µm, in some examples of less than 500 µm.

The marker objects may be configured to selectively bind to a certain type of biological object, for example to a certain type of binding site associated with (e.g. present or provided on) a certain type of biological object. Thereby, this particular type of biological object ("target objects") from the sample may be labelled selectively, while other types of biological objects from the sample may e.g. not be labelled with marker objects or may be labelled with a different type of marker object as detailed below. The labelling may be performed using any cell-labelling technique known in the art, e.g. by streptavidin/biotin-based and/or antibody-based cell labelling. A type of biological object as used herein may for example refer to a certain type of cell (e.g. a certain type of blood cell such as erythrocyte, leukocyte or platelet) or to a certain subtype of cell (e.g. a certain leukocyte subtype of such as neutrophil, eosinophil, basophil, lymphocyte or monocyte; a certain lymphocyte subtype of such as B cell, T cell or natural killer cell; or a certain T cell subtype such as T helper cell /CD4+ cell). In other examples, a type of biological object may refer to a certain nucleic acid or to a certain protein. The marker objects may be configured to bind to a single biological object (e.g. such that the composite objects consist of a single biological objects and a single marker object) or may be configured to bind to a plurality of biological objects (e.g. such that the composite object consists of a plurality of biological objects and a single marker object).

The sample may be a sample extracted from a patient, in particular a liquid sample such as a blood sample (for example a whole blood sample or a blood fraction sample), e.g. as detailed above. The suspension may for example be prepared as described above for the method according to the first aspect of the invention, e.g. by adding the viscoelastic fluid (or the shear-thinning polymer) to the sample or vice-versa and optionally diluting the sample. The biological objects may be labelled with the marker objects prior to and/or after preparing the suspension comprising the viscoelastic fluid. In other words, the steps of labelling the biological objects and preparing the suspension may be executed in an arbitrary order and may in particular also be executed simultaneously at least in part. Labelling the biological objects may for example comprise adding the marker objects to the sample and/or to the suspension, e.g. by adding a marker fluid containing the marker objects. In some embodiments, the viscoelastic fluid may be the marker fluid, i.e. may also contain the marker objects. The biological objects may be exposed to the marker objects for an amount of time that is sufficient to allow for the formation of the composite objects, i.e. the binding of the marker objects to the biological objects or vice-versa, prior to taking the phase shift images.

The flow of the suspension along the microfluidic channel may for example be generated as detailed above for the method according to the first aspect of the invention. The composition of the suspension, a flow velocity or flow rate of the suspension and/or the dimensions and/or shape of the microfluidic channel may be adapted so as to achieve viscoelastic focusing of the composite aggregates in the focal plane of the microscope. In some examples, the composite aggregates may additionally or alternatively be focused hydrodynamically, e.g. as detailed above.

Composite aggregates of biological objects and marker objects are similar to cell aggregates in the sense that the composite aggregates also consist of two or more constituents that are bound or adhere to each other. Composite aggregates may also be fragile and prone to break apart, e.g. when exposed to mechanical forces. Furthermore, composite aggregates may differ in size from individual biological objects or other composite aggregates. Therefore, using a suspension comprising a viscoelastic fluid as specified above may be advantageous for imaging composite aggregates for the same reasons as for cell aggregates. In particular, such a suspension may allow for a reliable focusing of objects of various sizes (e.g. composite objects and non-composite objects) while reducing mechanical stress on the objects, thus preventing damage to or disintegration of the composite objects.

The one or more phase shift images of the suspension and of the composite aggregates and/or biological objects contained therein may be taken as described above for the method according to the first aspect of the invention, for example using a digital holographic microscope, wherein the microscope may for example image a portion of the microfluidic channel.

Composite aggregates in the one or more phase shift images may for example be identified similar to the identification of cell aggregates described above. This may in particular comprise distinguishing composite aggregates comprising one or more marker objects from other objects such as non-aggregated marker objects (i.e. individual/single marker objects not contained in a composite aggregate) and/or non-labelled biological objects (e.g. single cells and/or cell aggregates that do not form a composite aggregate with a marker object). This may further comprise identifying constituents of a composite aggregate, e.g. a number and/or a type of the biological objects (in particular cells) contained therein and/or a number and/or a type of the marked objects contained therein. Marker objects and/or composite aggregates may for example be identified (e.g. distinguished from biological objects) based on one or more morphological parameters pertaining to their size, shape and/or structure, for example a mean diameter (equivalent diameter) and/or a phase shift (optical height). Additionally or alternatively, marker objects and/or composite aggregates may also be identified using classical and/or artificial intelligence-based (AI-based) computer vision techniques, e.g. using a neural network-based classifier. Furthermore, labelled and/or non-labelled cell aggregates and/or single cells may also be identified in the one or more phase shift images, e.g. as detailed above.

In a preferred embodiment, the composite aggregates in the one or more phase shift images are identified without relying on or using intensity images, i.e. may be identified based on the one or more phase shift images only. In other embodiments, identifying composite aggregates in the one or more phase shift images may comprise analyzing one or more intensity images associated with the one or more phase shift images. A composite aggregate in a phase shift image may for example be identified based on or using a corresponding intensity image (e.g. an intensity image that was reconstructed from the same interference image(s) as the phase shift image), for example by identifying one or more constituents of the respective aggregate in the intensity image.

In some embodiments, two or more different types of marker objects (e.g. microbeads of different types) may be used. The marker objects may for example comprise marker objects of a first type and marker objects of a second type.

Marker objects of different types may differ in one or more geometric and/or optical properties such that marker objects of different types can be distinguished in a phase shift image and/or in an intensity image. Marker objects of different types (e.g. marker objects of the first type and marker objects of the second type) may for example differ in one or both of a size (e.g. a physical dimension such as a diameter) and a refractive index. For example, a physical dimension of marker objects of different types (e.g. for all possible permutations of the types of marker objects used) may differ by at least 1 µm, preferably at least 2 µm, most preferably at least 3 µm (e.g. a physical dimension of the marker objects of the first type may be at least 1 µm, preferably at least 2 µm, most preferably at least 3 µm smaller or larger than the respective physical dimension of the marker objects of the second type). Additionally or alternatively, the refractive index of the material that the marker objects of different types comprise or consist of may differ by at least 0.1, in some examples by at least 0.2, preferably by at least 0.3, in one example by at least 0.5. The physical dimension and/or the refractive index may for example be chosen such that a phase shift associated with marker objects of different types (e.g. a mean, median or maximum phase shift/optical height) differs by at least π (λ/2), preferably by at least 2π (λ), most preferably at least 4π (2λ).

Based on their different geometric and/or optical properties, marker objects of different types may be distinguished in a phase shift image and/or in an intensity image. The type of a marker object may for example be determined based on one or more morphological parameters pertaining to its size, shape and/or structure, for example a size such as a mean diameter (equivalent diameter) and/or a phase shift (optical height), e.g. by defining one or more thresholds for the respective parameters. Additionally or alternatively, the type of marker object may also be determined using classical and/or artificial intelligence-based (AI-based) computer vision techniques, e.g. using a neural network-based classifier.

Preferably, marker objects of different types are distinguished in the one or more phase shift images based on a phase shift associated with the respective marker object, for example using one or more thresholds for said phase shift. For example, the marker objects of the second type may differ from the marker objects of the first type in the refractive index (and optionally in their size) and the method may further comprise distinguishing, in the one or more phase shift images, marker objects of the second type from marker objects of the first type based on a phase shift associated with the respective marker object. A marker object may e.g. be classified as a marker object of the first type if said phase shift is below a classification threshold and may be classified as a marker object of the second type if said phase shift is above the classification threshold. In some embodiments, marker objects of different types are distinguished based solely on the phase shift associated with the respective marker object (e.g. without relying on any information other than the phase information or phase shift). In other embodiments, marker objects of different types may be distinguished using a more complex classification metric, for example a classification metric based on a phase shift and a size (e.g. a physical dimension in the image plane) of the marker objects.

Marker objects of different types may be configured to selectively bind to different types of binding sites (e.g. to different molecular structures such as different antigens or epitops) on the biological objects. For example, the marker objects of the first type may be configured to selectively bind to a binding site of a first type on the biological objects (e.g. to a first antigen) and the marker objects of the second type may be configured to selectively bind to a binding site of a second type on the biological objects (e.g. to a second antigen).

The different types of binding sites may be associated with different types of biological objects, e.g. to distinguish biological objects of different types via the different types of marker objects attached thereto. For example, the binding site of the first type may be a binding site on biological objects of a first type (e.g. a first type or subtype of cell) and the binding site of the second type may be a binding site on biological objects of a second type (e.g. a second type or subtype of cell).

Additionally or alternatively, different types of binding sites may be associated with the same type of biological objects, for example to form composite aggregates comprising two or more marker objects (e.g. composite aggregates with a sandwich structure comprising a biological object arranged between a first marker object and a second marker object. For example, the binding site of the first type and the binding site of the second type may be different binding sites on biological objects of the same type (e.g. different epitopes on cell of a certain type or different molecular structures on a certain protein).

In some embodiments, the biological objects to be labelled with marker objects are or comprise leukocytes, in particular lymphocytes. The marker objects of the first type may be configured to selectively bind to leukocytes of a first type, in particular to lymphocytes of a first type (for example to T cells or to a subtype of T cells such as e.g. T helper cells/CD4+ cells). The marker objects of the second type may be configured to selectively bind to leukocytes of a second type, in particular to lymphocytes of a second type (for example to B cells or natural killer cells or to a different subtype of T cells such as e.g. cytotoxic T cells/CD8+ cells). This may for example allow for distinguishing different types of lymphocytes, in particular different types of T cells, which due to their similar morphology may otherwise be difficult to distinguish from each other in phase shift images.

Some or all of the marker objects may comprise or consist of a magnetic material, for example a paramagnetic material (e.g. a material with a magnetic susceptibility of more than 10⁻⁵, preferably of more than 2·10⁻⁵) or diamagnetic material (e.g. a material with a magnetic susceptibility of less than -10⁻⁵, preferably of less than -2 · 10⁻⁵). Preferably, the respective marker objects comprise or consist of ferrimagnetic material and/or a ferromagnetic material. In one example, some or all of the marker objects are superparamagnetic objects. Marker objects made from a magnetic material may for example allow for the manipulation of composite aggregates using magnetic fields, e.g. for sorting objects and/or for accumulating objects in certain regions.

Additionally or alternatively, some or all of the marker objects may comprise or consist of a material having a high acoustic impedance. As used herein, a high acoustic impedance may for example refer to an acoustic impedance of at least 10 N·s/m³, preferably of at least 30 N·s/m³, in one example of at least 50 N·s/m³. Marker objects made of a material with a high acoustic impedance may for example allow for the manipulation of composite aggregates using acoustic waves such as ultrasound, e.g. for sorting objects and/or for accumulating objects in certain regions.

In some embodiments, some or all of the marker objects may be functionalized. The respective marker objects may for example comprise a substance that is configured to interact (e.g. chemically) with a biological object. The substance may for example be a chemical messenger that is configured to bind to a receptor on the biological object, e.g. to activate or inhibit a response of the biological object. The substance may for example be arranged on a surface of the marker objects and/or in a surface layer of the marker objects. The biological objects may for example be or comprise platelets and/or leukocytes. Some or all of the marker objects may comprise a platelet-activating substance to induce platelet aggregation and/or leukocyte-platelet aggregation, a coagulation-inhibiting substance and/or a leukocyte-activating substance, e.g. as detailed above for the method according to the first aspect of the invention. The platelet-activating substance may for example be selected from the group consisting of adenosine diphosphate (ADP), thrombin receptor activating peptide (TRAP), epinephrin, thrombin, Von-Willebrand-factor, C-reactive protein (CRP), selectin P ligand (PSGL-1), fibrinogen, thromboxane, tissue factor and collagen. Additionally or alternatively, some or all of the marker objects may for example comprise a drug such as a checkpoint inhibitor, one or more antibody drug conjugates and/or one or more bispecific T-cell engaging antibody constructs.

Accordingly, the present invention also provides a method for detecting cellular and/or molecular biological objects using a quantitative phase-contrast microscope, the method comprising: (1) labelling biological objects from a sample with marker objects to form composite aggregates, wherein each of the composite aggregates comprises one or more of said biological objects and one or more of said marker objects; (2) preparing a suspension comprising composite aggregates; (3) generating a flow of the suspension along a microfluidic channel to viscoelastically and/or hydrodynamically focus composite aggregates in the suspension in a focal plane of the quantitative phase-contrast microscope; (4) taking one or more phase shift images of biological objects and/or composite aggregates in the suspension using the quantitative phase-contrast microscope; and (5) identifying composite aggregates in the one or more phase shift images. The above numbering is for clarity only and does not imply a certain order of execution. As far as technically feasible, the method may be executed in an arbitrary order and steps thereof may be executed simultaneously at least in part, e.g. the labelling of biological objects and the preparation of the suspension. The method may further comprise some or all of the features and/or steps of the methods according to the first and second aspect of the invention according to any one of the embodiments described herein.

According to the second aspect, the invention further provides a device for detecting cellular and/or molecular biological objects using a method for detecting cellular and/or molecular biological objects according to any one of the embodiments according to the second aspect of the invention described herein. The device comprises a mount configured to receive a microfluidic system comprising a measurement volume. The device further comprises a microscope configured to take phase shift images of biological objects and/or composite aggregates in the measurement volume. The device also comprises a microfluidics unit configured to receive a sample fluid. The sample fluid is a suspension comprising a viscoelastic fluid and composite aggregates, wherein each of the composite aggregates comprises one or more biological objects from a sample and one or more marker objects for labelling the biological objects. The viscoelastic fluid comprises a shear-thinning polymer having a molecular weight between 2 MDa and 10 MDa with a mass fraction of the shear-thinning polymer in the sample fluid being less than 0.2%. The microfluidics unit is configured to generate a flow of the sample fluid through the measurement volume to viscoelastically focus composite aggregates in the sample fluid flow in a focal plane of the microscope. The device further comprises a controller configured to identify composite aggregates in a phase shift image of the sample fluid flow obtained from the microscope.

The device according to the second aspect of the invention and/or its components including the microfluidic system may be similar to the device according to the first aspect of the invention and its components, respectively. The device according to the second aspect of the invention may comprise some or all of the features and/or components of the device according to the first aspect of the invention described above, e.g. some or all of the features and/or components of the device 100 of Figs. 1 and 2. For example, the device 100 may be adapted for detecting cellular and/or molecular biological objects instead of or in addition to cell aggregates, e.g. by adapting the microscope 108, the microfluidics unit 120 and/or the controller 124 accordingly. In some embodiments, the device according to the second aspect of the invention may also be configured for detecting cell aggregates using a method according to any one of the embodiments according to the first aspect of the invention described herein.

The device according to the second aspect of the invention further comprises a sample preparation unit, which in some examples may be integrated with the microfluidics unit into a single unit. The sample preparation unit is configured to provide the viscoelastic fluid comprising the shear-thinning polymer with a molecular weight between 2 MDa and 10 MDa to prepare the sample fluid comprising composite aggregates and the viscoelastic fluid, wherein the mass fraction of the shear-thinning polymer in the sample fluid is less than 0.2%, e.g. as detailed above for the device according to the first aspect of the invention. The sample preparation unit may be configured to adjust a mass fraction of the shear-thinning polymer in the sample fluid and/or to dilute the sample fluid, e.g. as described above for the device according to the first aspect of the invention.

Additionally, the sample preparation unit may be configured to provide marker objects for labelling biological objects from the sample. Each of the marker objects is configured to bind to one or more biological objects to form a composite aggregate, e.g. as discussed above for the method according to the second aspect of the invention. The sample preparation unit may for example be configured to add the marker objects, e.g. in the form of a marker fluid containing the marker objects, to the sample, to the sample fluid/suspension and/or to the viscoelastic fluid. In some embodiments, the marker objects may be contained in the viscoelastic fluid.

The controller may be configured to execute some or all of the steps of a method for detecting cellular and/or molecular biological objects according to any one of the embodiments according to the second aspect of the invention described herein, e.g. some or all of the steps of method 800 described below. For this, the controller may be configured to control some or all of the other components of the device accordingly, in particular the microscope, the microfluidics unit and/or the sample preparation unit, for example by generating corresponding digital and/or analog control signals. The controller may be configured to identify marker objects in a phase shift image and/or to determine the type of a marker object from the phase shift image as described above, e.g. based on a size and/or a phase shift associated with marker object. In some embodiments, the controller may further be configured to execute some or all of the steps of a method for detecting cell aggregates of biological cells according to any one of the embodiments according to the first aspect of the invention described herein.

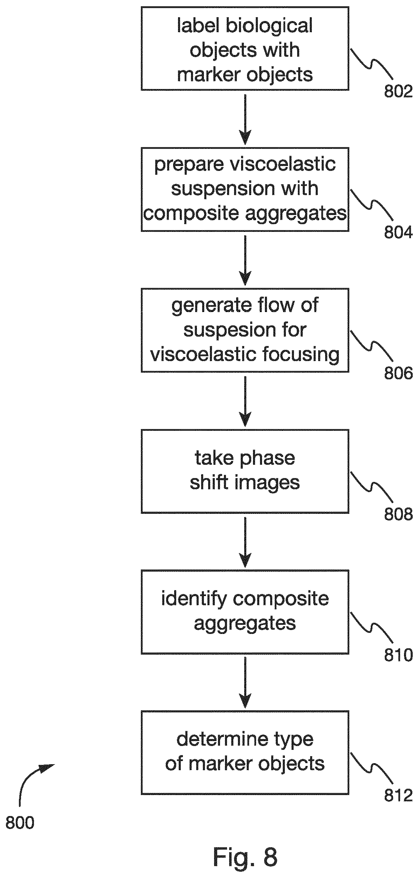

Fig. 8 shows a flow chart of a method 800 for detecting cellular and/or molecular biological objects using a quantitative phase-contrast microscope in accordance with an exemplary embodiment according to the second aspect of the invention. The method 800 may e.g. be used to detect the cellular and/or molecular biological objects in a sample such as a whole blood sample, which is used as a non-limiting example for illustrative purposes in the following. In other examples, the sample may e.g. be a blood fraction sample or a sample of a different body fluid. The method 800 may for example be implemented with the device 100 and the microfluidic system 200 of Figs. 1 and 2, which are used as examples for illustration purposes in the following. This is, however, not intended to be limiting in any way and the method 800 may also be implemented using a different device with a quantitative phase-contrast microscope and/or using a different microfluidic system. In one example, the method 800 is executed by the controller 124 of the device 100 at least in part or in its entirety. Furthermore, the method 800 is not limited to the order of execution shown in the flowchart of Fig. 8. As far as technically feasible, the method 800 may be executed in an arbitrary order and parts thereof may be executed simultaneously at least in part, for example steps 802 and 804.

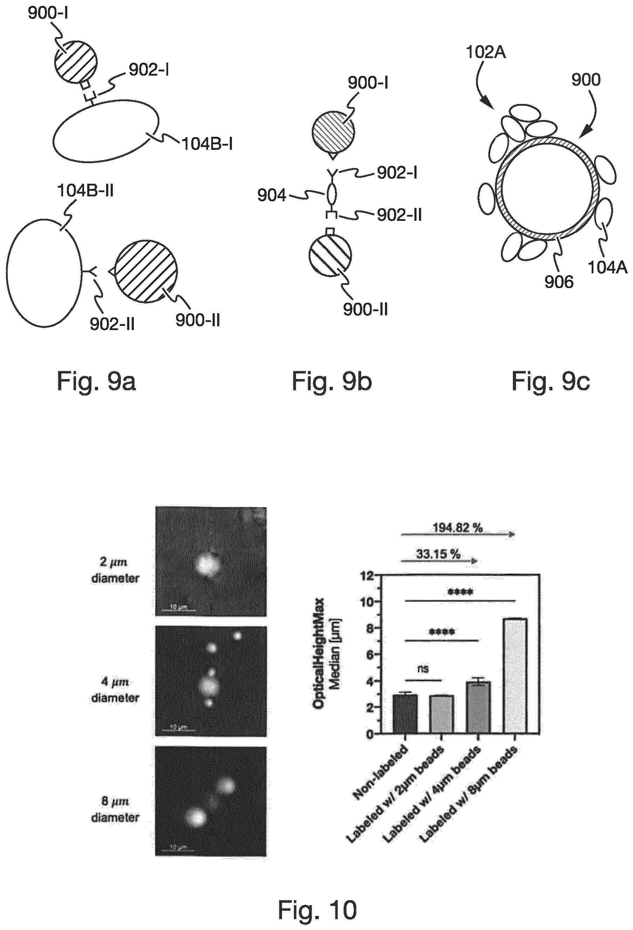

The method 800 comprises, in step 802, labelling biological objects from the sample with marker objects to form composite aggregates. A composite aggregate is an aggregate or cluster that comprises one or more biological objects and one or more marker objects. Examples for labelling of biological objects are schematically illustrated in Figs. 9a to 9c.

For example, marker objects 900-I of a first type may be added to the sample (or to the sample fluid or suspension prepared from the sample in step 804) as illustrated in Fig. 9a. The marker objects 900-I may for example be microbeads with a diameter between 2 µm and 20 µm, in some examples between 2 µm and 10 µm, in one example between 4 µm and 8 µm, and may for example comprise or consist of polystyrene. The marker objects 900-I are configured to selectively bind to biological objects of a first type, for example to cells of a first type such as to a certain subtype of leukocytes, in particular to T cells 104B-I of a first type, e.g. to T helper cells. The marker objects 900-I may for example be configured to bind to a binding site 902-I of a first type, which may be present or provided on the T cells 104B-I of the first type. The labelling may be performed using any cell-labelling technique known in the art, e.g. by strep-tavidin/biotin-based and/or antibody-based cell labelling.

In some embodiments, marker objects 900-II of a second type, e.g. microbeads of a second type, may be added to the sample (or to the sample fluid or suspension prepared from the sample in step 804) as also illustrated in Fig. 9a. The marker objects 900-II are configured to selectively bind to biological objects of a second type, for example to cells of a second type such as to a different subtype of leukocytes, in particular to T cells 104B-II of a second type, e.g. to cytotoxic T cells. The marker objects 900-II may for example be configured to bind to a binding site 902-II of a second type, which may be present or provided on the T cells 104B-II of the second type.

The marker objects 900-I of the first type and the marker objects 900-II of the second type differ in one or more geometric and/or optical properties such that marker objects of different types can be distinguished in a phase shift image and/or in an intensity image. For example, as illustrated in Fig. 9a, the marker objects 900-II may be larger than the marker objects 900-I. A diameter of the marker objects 900-II may for example be between 2 µm and 10 µm larger than a diameter of the marker objects 900-I.

Fig. 9b schematically illustrates another example for labelling biological objects. In this example, a biological macromolecule 904 such as a protein is labelled using marker objects 900-I of a first type and marker objects 900-II of a second type. The marker objects 900-I are configured to selectively bind to a binding site 902-I of a first type on the biological macromolecule 904. The marker objects 900-II are configured to selectively bind to a binding site 902-II of a second type on the same biological macromolecule 904, wherein the binding site 902-II may e.g. be arranged on a side of the biological macromolecule 904 opposite to the side of the biological macromolecule 904 that the binding site 902-I is arranged on to form a composite aggregate with a sandwich structure as illustrated in Fig. 9b. The biological macromolecule 904 itself may for example be too small to be resolved in phase shift images taken with the microscope 108. Labelling the biological macromolecule 904 with the marker objects 900-I and/or 900-II forms a composite aggregate with a size that may be substantially larger than the size of the biological macromolecule 904 such that the composite aggregate can easily be detected using the microscope 108.

In this example, the marker objects 900-I and 900-II have the same size, but differ in their refractive index as illustrated by the different hatching in Fig. 9b. The marker objects 900-I and 900-II may for example be microbeads comprising or consisting of different materials, e.g. of materials whose refractive index n (real part of the complex refractive index) differs by at least 0.3. The marker objects 900-I may for example be made of polystyrene (n ≈ 1.6), whereas the marker objects 900-II may for example be made of diamond (n ≈ 2.4), gold (n ≈ 0.26 @ λ = 1064nm) or gold-coated polystyrene.

Fig. 9c schematically illustrates yet another example for labelling biological objects. In this example, a functionalized marker object 900 is used for labelling and activating platelets 104A. The marker object 900 may be configured to selectively bind to platelets 104A or vice-versa. The marker object 900 comprises a surface layer (e.g. a surface coating) of a platelet-activating substance 906, wherein the platelet-activating substance 906 may for example be selected from the group consisting of adenosine diphosphate (ADP), thrombin receptor activating peptide (TRAP), epinephrin, thrombin, Von-Willebrand-factor, C-reactive protein (CRP), selectin P ligand (PSGL-1), fibrinogen, thromboxane, tissue factor and collagen. The platelet-activating substance 906 may induce platelet aggregation, e.g. such that platelet aggregates 102A form on or in the vicinity of the surface of the marker object 900 as illustrated in Fig. 9c. This may for example allow for implementing assays for probing platelet aggregation.

The method 800 further comprises, in step 804, preparing a suspension (sample fluid) that comprises a viscoelastic fluid and composite aggregates, e.g. similar to step 302 of the method 300. The viscoelastic fluid comprises a shear-thinning polymer having a molecular weight between 2 MDa and 10 MDa, preferably between 3.5 MDa and 4.5 MDa, e.g. 4.0 MDa. A mass fraction of the shear-thinning polymer in the suspension is less than 0.2%, preferably between 0.04% and 0.06%, for example 0.05%. The shear-thinning polymer or a fluid containing the shear-thinning polymer may for example be added to the sample prior to or after labelling the biological objects in step 802. The shear-thinning polymer may for example be poly(ethylene oxide) (PEO) or poly(vinyl pyrrolidone) (PVP).

In step 806, a flow 208A of the suspension is generated along a microfluidic channel such as the measurement volume 202 to viscoelastically focus composite aggregates in the suspension in a focal plane of a quantitative phase-contrast microscope such as the microscope 108, for example similar to steps 304 and 306 of the method 300. Preferably, the flow 208A is generated such that non-labelled biological objects such as non-labelled single cells and/or non-labelled cell aggregates are also focused in the focal plane of the microscope 108.

In step 808, one or more phase shift images of biological objects and/or composite aggregates in the suspension flowing through the measurement volume 202 are taken using the microscope 108, e.g. similar to step 308 of method 300.

The method 800 further comprises analyzing the one or more phase shift images in steps 810 and 812, e.g. similar to the image analysis performed in steps 310 and 312 of method 300. The image analysis may for example be performed by the controller 124 of the device 100.

In step 810, composite aggregates are identified in the one or more phase shift images. This may for example comprise identifying marker objects in the one or more phase shift images and determining whether another object (i.e. a biological object labelled by the respective marker object) is in contact with or in close vicinity to the marker object, e.g. within a distance threshold, or vice-versa. Thereby, single marker objects may be distinguished from marker objects bound in a composite aggregate. Marker objects and/or composite aggregates may be identified based on one or more morphological parameters pertaining to their size, shape and/or structure, for example a mean diameter (equivalent diameter) and/or a phase shift (optical height), e.g. by defining one or more thresholds for the respective parameters.

In step 812, a type of marker object may be determined for some or all of the composite aggregates and/or marker objects identified in step 810, e.g. to distinguish between marker objects 900-I of the first type and marker objects 900-II of the second type. This may for example allow for distinguishing T cells 104B-I of the first type from T cells 104B-II of the second type. The type of a marker object may for example be determined based on one or more morphological parameters pertaining to its size, shape and/or structure, for example a mean diameter (equivalent diameter) and/or a phase shift (optical height), e.g. by defining one or more thresholds for the respective parameters. Step 812 may further comprise identifying other constituents of the composite aggregates identified in step 810, e.g. determining a number and/or a type of the biological objects in a composite aggregate and/or determining a number of the marker objects in the composite aggregate.

Analyzing the one or more phase shift images may further comprise identifying single cells and/or cell aggregates in the one or more phase shift images as well as optionally analyzing the single cells and/or cell aggregates, e.g. to determine a cell type, to identify constituents of a cell aggregate and/or determine a number of cells in a cell aggregate, for example by executing step 310 and/or step 312 of method 300 at least in part.

Fig. 10 shows phase shift images of composite aggregates, each of which comprises a T helper cell (CD4+ cell) and a pair of marker objects. The phase shift images were obtained using a method in accordance with an exemplary embodiment according to the second aspect of the invention such as the method 800, wherein polystyrene microbeads were used as marker objects for labelling the T helper cells. The top image shows a T helper cell labelled by a pair of microbeads with a diameter of 2 µm each, the center image shows a T helper cell labelled by a pair of microbeads with a diameter of 4 µm each and the bottom image shows a T helper cell labelled by a pair of microbeads with a diameter 8 µm each. The plot on the right depicts the median of the optical height maximum (maximum phase shift) associated with the (composite) objects for non-labelled T helper cells in comparison with T helper cells labelled with 2 µm beads, 4 µm beads and 8 µm beads, respectively. T helper cells labelled with 4 µm beads and 8 µm beads, respectively, exhibit a optical height maximum that is significantly higher than that of non-labelled T helper cells.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

100 - device for detecting cell aggregates and/or for detecting cellular and/or molecular biological objects
102A - platelet aggregate
102B - leukocyte-platelet aggregate
104A - platelet
104B - leukocyte
104B-I - T cell of a first type
104B-II - T cell of a second type
106 - mount
108 - microscope
108A - microscope controller
110 - objective
112 - holographic imaging system
114 - imaging lens
116 - camera
118 - illumination source
120 - microfluidics unit
122 - sample preparation unit
124 - controller
200 - microfluidic system
202 - measurement volume
202A - detection window
202B - illumination window
204 - hydrodynamic focusing junction
206A - sample channel
206B - sheath flow channel
208A - sample fluid flow
208B - sheath flow
300 - method for detecting cell aggregates
302 - step of preparing a suspension comprising biological cells from a sample and a viscoelastic fluid
304 - step of generating a flow of the suspension
306 - step of generating two or more sheath flows
308 - step of taking one or more phase shift images
310 - step of identifying cell aggregates in the one or more phase shift images
312 - step of analyzing cell aggregates in the one or more phase shift images
800 - method for detecting cellular and/or molecular biological objects
802 - step of labelling biological objects from a sample with marker objects to from composite aggregates
804 - step of preparing a suspension comprising composite aggregates and a viscoelastic fluid
806 - step of generating a flow of the suspension for viscoelastic focusing
808 - step of taking one or more phase shift images of biological objects and/or composite aggregates
810 - step of identifying composite aggregates in the one or more phase shift images
812 - step of determining a type of the marker objects in the one or more phase shift images
900-I - marker objects of a first type
900-II - marker objects of a second type
902-I - binding site of a first type
902-II - binding site of a second type
904 - biological macromolecule
906 - platelet-activating substance

## Claims

1. A method (300) for detecting cell aggregates (102A, 102B) of biological cells (104A, 104B) using a quantitative phase-contrast microscope (108), the method (300) comprising:
preparing a suspension, the suspension comprising a viscoelastic fluid and biological cells (104A, 104B) from a sample, wherein the viscoelastic fluid comprises a shear-thinning polymer having a molecular weight between 2 MDa and 10 MDa and wherein a mass fraction of the shear-thinning polymer in the suspension is less than 0.2%;
generating a flow (208A) of the suspension along a microfluidic channel (202) to viscoelastically focus cell aggregates (102A, 102B) in the suspension in a focal plane of the quantitative phase-contrast microscope (108);
taking one or more phase shift images of the biological cells (104A, 104B) in the suspension using the quantitative phase-contrast microscope (108); and
identifying cell aggregates (102A, 102B) in the one or more phase shift images.

2. The method (300) of claim 1, wherein:
identifying the cell aggregates (102A, 102B) in the one or more phase shift images comprises determining a number of cells in the respective cell aggregate (102A, 102B) and/or a cell type of some or all of the cells (104A, 104B) in the respective cell aggregate (102A, 102B), in particular wherein determining the number of cells in the respective cell aggregate (102A, 102B) and/or the cell type of some or all of the cells (104A, 104B) in the respective cell aggregate (102A, 102B) comprises: performing an image segmentation on a portion of a phase shift image associated with the cell aggregate (102A, 102B) to identify constituents (104A, 104B) of the cell aggregate (102A, 102B), determining one or more morphological parameters for some or all of the constituents (104A, 104B) of the cell aggregate (102A, 102B) from the segmented image, and determining the cell type of the respective constituents (104A, 104B) based on the one or more morphological parameters; and/or
the method (300) further comprises identifying single cells (104A, 104B) in the one or more phase shift images and determining a cell type of the single cells (104A, 104B).

3. The method (300) of any one of the preceding claims, wherein:
the shear-thinning polymer has a molecular weight between 3.5 MDa and 4.5 MDa; and/or
the mass fraction of the shear-thinning polymer in the suspension is between 0.03% and 0.12%, preferably between 0.04% and 0.06%; and/or
the shear-thinning polymer is poly(ethylene oxide) or poly(vinyl pyrrolidone); and/or
a flow velocity of the suspension along the microfluidic channel (202) is chosen such that a shear stress within the flow (208A) is below 50 Pa, preferably below 10 Pa; and/or
a length from an inlet of the microfluidic channel to a focal point of the quantitative phase-contrast microscope (108) is between 30 mm and 60 mm, preferably between 35 mm and 50 mm; and/or
a height of the flow (208A) of the suspension in a direction perpendicular to the focal plane of the quantitative phase-contrast microscope (108) is between 30 µm and 100 µm, preferably between 40 µm and 60 µm.

4. The method (300) of any one of the preceding claims, further comprising generating two or more sheath flows (208B) along the microfluidic channel (202) to hydrodynamically focus the flow (208A) of the suspension such that cell aggregates (102A, 102B) in the suspension are focused in the focal plane of the quantitative phase-contrast microscope (108), in particular wherein:
some or all of the two or more sheath flows (208B) comprise a viscoelastic fluid; and/or
the flow (208A) of the suspension is hydrodynamically focused by generating a pair of lateral sheath flows sandwiching the flow (208A) of the suspension in a first direction and a pair of vertical sheath (208B) flows sandwiching the flow (208A) of the suspension in a second direction (Z) perpendicular to the first direction.

5. The method (300) of any one of the preceding claims, wherein the sample is a whole blood sample or a blood fraction sample and identifying cell aggregates (102A, 102B) in the one or more phase shift images comprises identifying platelet aggregates (102A) and/or leukocyte-platelet aggregates (102B) in the one or more phase shift images, in particular wherein:
the method (300) further comprises determining a number of leukocyte-platelet aggregates (102B) comprising two or more leukocytes (104B) and/or a number of cell aggregates (102A, 102B) comprising three or more cells (104A, 104B) in the one or more phase shift images; and/or
preparing the suspension comprises diluting the whole blood sample or the blood fraction sample, respectively, by a factor between 1:10 and 1:1000, preferably between 1:50 and 1:200; and/or
preparing the suspension does not comprise a lysis of erythrocytes, a sphering of platelets and/or of erythrocytes and/or a labelling or staining of cells; and/or
the method (300) further comprises adding a platelet-activating substance and/or a leukocyte-activating substance to induce platelet aggregation and/or leukocyte-platelet aggregation.

6. A device (100) for detecting cell aggregates (102A, 102B) of biological cells (104A, 104B) using a method (300) according to any one of the preceding claims, the device (100) comprising:
a mount (106) configured to receive a microfluidic system (200) comprising a measurement volume (202);
a microscope (108) configured to take phase shift images of biological cells (104A, 104B) in the measurement volume (202);
a microfluidics unit (120) configured to receive a sample fluid, wherein the sample fluid is a suspension comprising a viscoelastic fluid and biological cells (104A, 104B) from a sample, the viscoelastic fluid comprising a shear-thinning polymer having a molecular weight between 2 MDa and 10 MDa and a mass fraction of the shear-thinning polymer in the sample fluid being less than 0.2%, wherein the microfluidics unit (120) is configured to generate a flow (208A) of the sample fluid through the measurement volume (202) to viscoelastically focus cell aggregates (102A, 102B) in the sample fluid flow (208A) in a focal plane of the microscope (108); and
a controller (124) configured to identify cell aggregates (102A, 102B) in a phase shift image of the sample fluid flow (208A) obtained from the microscope (108),
wherein the device (100) further comprises a sample preparation unit (122) configured to provide the viscoelastic fluid comprising the shear-thinning polymer with a molecular weight between 2 MDa and 10 MDa to prepare the sample fluid comprising the viscoelastic fluid and biological cells (104A, 104B) from the sample, wherein the mass fraction of the shear-thinning polymer in the sample fluid is less than 0.2%.

7. The device (100) of claim 6, wherein:
the microfluidic system (200) further comprises a hydrodynamic focusing junction (204) in fluid communication with the measurement volume (202), the hydrodynamic focusing junction (204) being configured to generate two or more sheath flows (208B) surrounding the sample fluid flow (208A) to hydrodynamically focus the sample fluid flow (208A) in the measurement volume (202); and
the microfluidics unit (120) is configured to provide a sheath fluid to the hydrodynamic focusing junction (204) to hydrodynamically focus the sample fluid flow (208A) in the measurement volume (208) such that cell aggregates (102A, 102B) in the sample fluid flow (208A) are focused in the focal plane of the microscope (108).

8. The device (100) of claim 6 or 7, wherein the sample preparation unit (122) is configured to:
adjust a mass fraction of the shear-thinning polymer in the sample fluid at least within a range between 0.03% and 0.12%, preferably at least within a range between 0% and 0.2%; and/or
dilute the sample fluid by a factor between 1:10 and 1:1000, preferably between 1:50 and 1:200; and/or
add a platelet-activating substance and/or a leukocyte-activating substance to the sample fluid and/or to the sheath fluid.

9. The device (100) of any one of claims 6 to 8, wherein:
the microfluidics unit (120) is configured to control a flow velocity of the sample fluid flow (208A) in the measurement volume (202), wherein the flow velocity of the sample fluid flow (208A) is between 1 mm/s and 250 mm/s, preferably between 5 mm/s and 100 mm/s; and/or
the controller (124) is configured to determine a number of cells in an identified cell aggregate (102A, 102B) and/or a cell type of some or all of the cells in the identified cell aggregate (102A, 102B); and/or
the controller (124) is configured to identify platelet aggregates (102A) and/or leukocyte-platelet aggregates (102B) in the phase shift image, in particular wherein the controller (124) is further configured to determine a number of leukocyte-platelet aggregates (102B) comprising two or more leukocytes (104B) and/or a number of cell aggregates (102A, 102B) comprising three or more cells (104A, 104B) in the phase shift image; and/or
the controller (124) is configured to execute a method (300) for detecting cell aggregates (102A, 102B) of biological cells (104A, 104B) according to any one of claims 1 to 5.

10. A method (800) for detecting cellular and/or molecular biological objects (102A, 102B, 104A, 104B, 904) using a quantitative phase-contrast microscope (108), the method (800) comprising:
labelling biological objects (102A, 102B, 104A, 104B, 904) from a sample with marker objects (900, 900-I, 9oo-II) to form composite aggregates, wherein each of the composite aggregates comprises one or more of said biological objects (102A, 102B, 104A, 104B, 904) and one or more of said marker objects (900, 900-I, 9oo-II);
preparing a suspension, the suspension comprising composite aggregates and a viscoelastic fluid, wherein the viscoelastic fluid comprises a shear-thinning polymer having a molecular weight between 2 MDa and 10 MDa and wherein a mass fraction of the shear-thinning polymer in the suspension is less than 0.2%;
generating a flow (208A) of the suspension along a microfluidic channel (202) to viscoelastically focus composite aggregates in the suspension in a focal plane of the quantitative phase-contrast microscope (108);
taking one or more phase shift images of biological objects (102A, 102B, 104A, 104B, 904) and/or composite aggregates in the suspension using the quantitative phase-contrast microscope (108); and
identifying composite aggregates in the one or more phase shift images.

11. The method (800) of claim 10, wherein:
the shear-thinning polymer has a molecular weight between 3.5 MDa and 4.5 MDa; and/or
the mass fraction of the shear-thinning polymer in the suspension is between 0.03% and 0.12%, preferably between 0.04% and 0.06%; and/or
said biological objects (102A, 102B, 104A, 104B, 904) are or comprise one or more of biological marcromolecules (904), single cells (104A, 104B) and cell aggregates (102A, 102B); and/or
said marker objects (900, 900-1, 900-II) are or comprise microbeads having a physical dimension, in particular a diameter, of between 0.5 µm and 30 µm and/or comprising or consisting of a material with a refractive index of at least 1.45 or no more than 1.1; and/or
some or all of said marker objects (900, 900-I, 900-II) comprise a magnetic material and/or a material having an acoustic impedance of at least 10 N·s/m³, preferably of at least 30 N·s/m³; and/or
said biological objects (102A, 102B, 104A, 104B, 904) are or comprise platelets (104A) and/or leukocytes (104B) and some or all of said marker objects (900, 900-I, 900-II) comprise a platelet-activating substance (906) to induce platelet aggregation and/or leukocyte-platelet aggregation, a coagulation-inhibiting substance and/or a leukocyte-activating substance.

12. The method (800) of claim 10 or 11, wherein said marker objects (900, 900-I, 900-II) comprise marker objects (900-I) of a first type and marker objects (900-II) of a second type, the marker objects (9oo-II) of the second type differing from the marker objects (900-I) of the first type in at least one of a size and a refractive index, in particular wherein the marker objects (9oo-II) of the second type differ from the marker objects (900-I) of the first type in the refractive index and the method (800) further comprises distinguishing, in the one or more phase shift images, marker objects (9oo-II) of the second type from marker objects (9oo-I) of the first type based on a phase shift associated with the respective marker object.

13. The method (800) of claim 12, wherein the marker objects (900-I) of the first type are configured to selectively bind to a binding site (902-I) of a first type on the biological objects (102A, 102B, 104A, 104B, 904) and the marker objects (900-II) of the second type are configured to selectively bind to a binding site (902-II) of a second type on the biological objects (102A, 102B, 104A, 104B, 904), in particular wherein:
the binding site (9oo-I) of the first type is a binding site on biological objects (104B-I) of a first type and the binding site (9oo-II) of the second type is a binding site on biological objects (104B-II) of a second type, or the binding site (900-I) of the first type and the binding site (900-II) of the second type are different binding sites on biological objects (904) of the same type; and/or
said biological objects (102A, 102B, 104A, 104B, 904) are or comprise leukocytes (104B), in particular lymphocytes, the marker objects (9oo-I) of the first type are configured to selectively bind to leukocytes (104B-I) of a first type, in particular to lymphocytes of a first type, and the marker objects (9oo-II) of the second type are configured to selectively bind to leukocytes (104B-II) of a second type, in particular to lymphocytes of a second type.

14. A device (100) for detecting cellular and/or molecular biological objects (102A, 102B, 104A, 104B, 904) using a method (800) according to any one of claims 10 to 13, the device (100) comprising:
a mount (106) configured to receive a microfluidic system (200) comprising a measurement volume (202);
a microscope (108) configured to take phase shift images of biological objects (102A, 102B, 104A, 104B, 904) and/or composite aggregates in the measurement volume (202);
a microfluidics unit (120) configured to receive a sample fluid, wherein the sample fluid is a suspension comprising a viscoelastic fluid and composite aggregates, each of which comprises one or more biological objects (102A, 102B, 104A, 104B, 904) from a sample and one or more marker objects (900, 900-I, 900-II) for labelling the biological objects (102A, 102B, 104A, 104B, 904), the viscoelastic fluid comprising a shear-thinning polymer having a molecular weight between 2 MDa and 10 MDa and a mass fraction of the shear-thinning polymer in the sample fluid being less than 0.2%, wherein the microfluidics unit (120) is configured to generate a flow (208A) of the sample fluid through the measurement volume (202) to viscoelastically focus composite aggregates in the sample fluid flow (208A) in a focal plane of the microscope (108); and
a controller (124) configured to identify composite aggregates in a phase shift image of the sample fluid flow (208A) obtained from the microscope (108),
wherein the device (100) further comprises a sample preparation unit (122) configured to provide the viscoelastic fluid comprising the shear-thinning polymer with a molecular weight between 2 MDa and 10 MDa to prepare the sample fluid comprising the viscoelastic fluid and composite aggregates, wherein the mass fraction of the shear-thinning polymer in the sample fluid is less than 0.2%.

15. The device (100) of claim 14, wherein:
the sample preparation unit (122) is further configured to provide marker objects (900, 900-I, 9oo-II) for labelling biological objects (102A, 102B, 104A, 104B, 904) from the sample, wherein each of the marker objects (900, 900-I, 900-II) is configured to bind to one or more biological objects (102A, 102B, 104A, 104B, 904) to form a composite aggregate; and/or
the controller (124) is configured to execute a method (800) for detecting cellular and/or molecular biological objects (102A, 102B, 104A, 104B, 904) according to any one of claims 10 to 13.

## Patentansprüche

1. Verfahren (300) zum Detektieren von Zellaggregaten (102A, 102B) von biologischen Zellen (104A, 104B) mittels eines quantitativen Phasenkontrastmikroskops (108), wobei das Verfahren (300) Folgendes umfasst:
Herstellen einer Suspension, wobei die Suspension ein viskoelastisches Fluid und biologische Zellen (104A, 104B) aus einer Probe umfasst, wobei das viskoelastische Fluid ein scherverdünnendes Polymer mit einem Molekulargewicht zwischen 2 MDa und 10 MDa umfasst und wobei ein Massenanteil des scherverdünnenden Polymers in der Suspension weniger als 0,2 % beträgt;
Erzeugen eines Flusses (208A) der Suspension entlang eines mikrofluidischen Kanals (202), um Zellaggregate (102A, 102B) in der Suspension in einer Fokalebene des quantitativen Phasenkontrastmikroskops (108) viskoelastisch zu fokussieren;
Aufnehmen eines oder mehrerer Phasenverschiebungsbilder der biologischen Zellen (104A, 104B) in der Suspension mittels des quantitativen Phasenkontrastmikroskops (108); und
Identifizieren von Zellaggregaten (102A, 102B) in dem einen oder den mehreren Phasenverschiebungsbildern.

2. Verfahren (300) nach Anspruch 1, wobei:
das Identifizieren der Zellaggregate (102A, 102B) in dem einen oder den mehreren Phasenverschiebungsbildern das Bestimmen einer Anzahl von Zellen in dem jeweiligen Zellaggregat (102A, 102B) und/oder eines Zelltyps von einigen oder allen der Zellen (104A, 104B) in dem jeweiligen Zellaggregat (102A, 102B) umfasst, insbesondere wobei das Bestimmen der Anzahl von Zellen in dem jeweiligen Zellaggregat (102A, 102B) und/oder des Zelltyps von einigen oder allen der Zellen (104A, 104B) in dem jeweiligen Zellaggregat (102A, 102B) Folgendes umfasst: Durchführen einer Bildsegmentierung an einem Teil eines Phasenverschiebungsbilds, der mit dem Zellaggregat (102A, 102B) assoziiert ist, um Bestandteile (104A, 104B) des Zellaggregats (102A, 102B) zu identifizieren, Bestimmen eines oder mehrerer morphologischer Parameter für einige oder alle der Bestandteile (104A, 104B) des Zellaggregats (102A, 102B) aus dem segmentierten Bild und Bestimmen des Zelltyps der jeweiligen Bestandteile (104A, 104B) basierend auf dem einen oder den mehreren morphologischen Parametern; und/oder
das Verfahren (300) ferner das Identifizieren einzelner Zellen (104A, 104B) in dem einen oder den mehreren Phasenverschiebungsbildern und das Bestimmen eines Zelltyps der einzelnen Zellen (104A, 104B) umfasst.

3. Verfahren (300) nach einem der vorhergehenden Ansprüche, wobei:
das scherverdünnende Polymer ein Molekulargewicht zwischen 3,5 MDa und 4,5 MDa aufweist; und/oder
der Massenanteil des scherverdünnenden Polymers in der Suspension zwischen 0,03 % und 0,12 %, vorzugsweise zwischen 0,04 % und 0,06 % beträgt; und/oder
das scherverdünnende Polymer Poly(ethylenoxid) oder Poly(vinylpyrrolidon) ist; und/oder
eine Fließgeschwindigkeit der Suspension entlang des mikrofluidischen Kanals (202) so gewählt ist, dass eine Scherspannung innerhalb des Flusses (208A) unter 50 Pa, vorzugsweise unter 10 Pa beträgt; und/oder
eine Länge von einem Einlass des mikrofluidischen Kanals zu einem Brennpunkt des quantitativen Phasenkontrastmikroskops (108) zwischen 30 mm und 60 mm, vorzugsweise zwischen 35 mm und 50 mm beträgt; und/oder
eine Höhe des Flusses (208A) der Suspension in einer Richtung senkrecht zu der Fokalebene des quantitativen Phasenkontrastmikroskops (108) zwischen 30 µm und 100 µm, vorzugsweise zwischen 40 µm und 60 µm beträgt.

4. Verfahren (300) nach einem der vorhergehenden Ansprüche, ferner umfassend das Erzeugen von zwei oder mehr Hüllflüssen (208B) entlang des mikrofluidischen Kanals (202), um den Fluss (208A) der Suspension hydrodynamisch zu fokussieren, so dass Zellaggregate (102A, 102B) in der Suspension in der Fokalebene des quantitativen Phasenkontrastmikroskops (108) fokussiert werden, wobei insbesondere:
einige oder alle der zwei oder mehr Hüllflüsse (208B) ein viskoelastisches Fluid umfassen; und/oder
der Fluss (208A) der Suspension hydrodynamisch fokussiert wird, indem ein Paar lateraler Hüllflüsse, die den Fluss (208A) der Suspension in einer ersten Richtung umgeben, und ein Paar vertikaler Hüllflüsse (208B), die den Fluss (208A) der Suspension in einer zweiten Richtung (Z) senkrecht zu der ersten Richtung umgeben, erzeugt werden.

5. Verfahren (300) nach einem der vorhergehenden Ansprüche, wobei die Probe eine Vollblutprobe oder eine Blutfraktionsprobe ist und das Identifizieren von Zellaggregaten (102A, 102B) in dem einen oder den mehreren Phasenverschiebungsbildern das Identifizieren von Thrombozyten-Aggregaten (102A) und/oder Leukozyten-Thrombozyten-Aggregaten (102B) in dem einen oder den mehreren Phasenverschiebungsbildern umfasst, wobei insbesondere:
das Verfahren (300) ferner das Bestimmen einer Anzahl von Leukozyten-Thrombozyten-Aggregaten (102B), die zwei oder mehr Leukozyten (104B) umfassen, und/oder einer Anzahl von Zellaggregaten (102A, 102B), die drei oder mehr Zellen (104A, 104B) umfassen, in dem einen oder den mehreren Phasenverschiebungsbildern umfasst; und/oder
das Herstellen der Suspension das Verdünnen der Vollblutprobe bzw. der Blutfraktionsprobe um einen Faktor zwischen 1:10 und 1:1000, vorzugsweise zwischen 1:50 und 1:200 umfasst; und/oder
das Herstellen der Suspension keine Lyse von Erythrozyten, keine Sphärierung von Thrombozyten und/oder von Erythrozyten und/oder keine Markierung oder Färbung von Zellen umfasst; und/oder
das Verfahren (300) ferner das Hinzufügen einer Thrombozyten-aktivierenden Substanz und/oder einer Leukozyten-aktivierenden Substanz umfasst, um Thrombozyten-Aggregation und/oder Leukozyten-Thrombozyten-Aggregation zu induzieren.

6. Vorrichtung (100) zum Detektieren von Zellaggregaten (102A, 102B) von biologischen Zellen (104A, 104B) mittels eines Verfahrens (300) nach einem der vorhergehenden Ansprüche, wobei die Vorrichtung (100) Folgendes umfasst:
eine Halterung (106), die dazu eingerichtet ist, ein mikrofluidisches System (200) aufzunehmen, das ein Messvolumen (202) umfasst;
ein Mikroskop (108), das dazu eingerichtet ist, Phasenverschiebungsbilder von biologischen Zellen (104A, 104B) in dem Messvolumen (202) aufzunehmen;
eine Mikrofluidik-Einheit (120), die dazu eingerichtet ist, ein Probenfluid aufzunehmen, wobei das Probenfluid eine Suspension ist, die ein viskoelastisches Fluid und biologische Zellen (104A, 104B) aus einer Probe umfasst, wobei das viskoelastische Fluid ein scherverdünnendes Polymer mit einem Molekulargewicht zwischen 2 MDa und 10 MDa umfasst und ein Massenanteil des scherverdünnenden Polymers in dem Probenfluid weniger als 0,2 % beträgt, wobei die Mikrofluidik-Einheit (120) dazu eingerichtet ist, einen Fluss (208A) des Probenfluids durch das Messvolumen (202) zu erzeugen, um Zellaggregate (102A, 102B) in dem Probenfluidfluss (208A) in einer Fokalebene des Mikroskops (108) viskoelastisch zu fokussieren; und
eine Steuerung (124), die dazu eingerichtet ist, Zellaggregate (102A, 102B) in einem von dem Mikroskop (108) erhaltenen Phasenverschiebungsbild des Probenfluidflusses (208A) zu identifizieren,
wobei die Vorrichtung (100) ferner eine Probenherstellungseinheit (122) umfasst, die dazu eingerichtet ist, das viskoelastische Fluid, das das scherverdünnende Polymer mit einem Molekulargewicht zwischen 2 MDa und 10 MDa umfasst, bereitzustellen, um das Probenfluid herzustellen, das das viskoelastische Fluid und biologische Zellen (104A, 104B) aus der Probe umfasst, wobei der Massenanteil des scherverdünnenden Polymers in dem Probenfluid weniger als 0,2 % beträgt.

7. Vorrichtung (100) nach Anspruch 6, wobei:
das mikrofluidische System (200) ferner eine hydrodynamische Fokussier-Einmündung (204) in Fluidverbindung mit dem Messvolumen (202) umfasst, wobei die hydrodynamische Fokussier-Einmündung (204) dazu eingerichtet ist, zwei oder mehr Hüllflüsse (208B) zu erzeugen, die den Probenfluidfluss (208A) umgeben, um den Probenfluidfluss (208A) in dem Messvolumen (202) hydrodynamisch zu fokussieren; und
die Mikrofluidik-Einheit (120) dazu eingerichtet ist, der hydrodynamischen Fokussier-Einmündung (204) ein Hüllfluid bereitzustellen, um den Probenfluidfluss (208A) in dem Messvolumen (208) hydrodynamisch zu so fokussieren, dass Zellaggregate (102A, 102B) in dem Probenfluidfluss (208A) in der Fokalebene des Mikroskops (108) fokussiert werden.

8. Vorrichtung (100) nach Anspruch 6 oder 7, wobei die Probenherstellungseinheit (122) dazu eingerichtet ist:
einen Massenanteil des scherverdünnenden Polymers in dem Probenfluid zumindest innerhalb eines Bereichs zwischen 0,03 % und 0,12 %, vorzugsweise zumindest innerhalb eines Bereichs zwischen 0 % und 0,2 % einzustellen; und/oder
das Probenfluid um einen Faktor zwischen 1:10 und 1:1000, vorzugsweise zwischen 1:50 und 1:200 zu verdünnen; und/oder
eine Thrombozyten-aktivierende Substanz und/oder eine Leukozyten-aktivierende Substanz zu dem Probenfluid und/oder zu dem Hüllfluid hinzuzufügen.

9. Vorrichtung (100) nach einem der Ansprüche 6 bis 8, wobei:
die Mikrofluidik-Einheit (120) dazu eingerichtet ist, eine Fließgeschwindigkeit des Probenfluidflusses (208A) in dem Messvolumen (202) zu steuern, wobei die Fließgeschwindigkeit des Probenfluidflusses (208A) zwischen 1 mm/s und 250 mm/s, vorzugsweise zwischen 5 mm/s und 100 mm/s beträgt; und/oder
die Steuerung (124) dazu eingerichtet ist, eine Anzahl von Zellen in einem identifizierten Zellaggregat (102A, 102B) und/oder einen Zelltyp von einigen oder allen der Zellen in dem identifizierten Zellaggregat (102A, 102B) zu bestimmen; und/oder
die Steuerung (124) dazu eingerichtet ist, Thrombozyten-Aggregate (102A) und/oder Leukozyten-Thrombozyten-Aggregate (102B) in dem Phasenverschiebungsbild zu identifizieren, insbesondere wobei die Steuerung (124) ferner dazu eingerichtet ist, eine Anzahl von Leukozyten-Thrombozyten-Aggregaten (102B), die zwei oder mehr Leukozyten (104B) umfassen, und/oder eine Anzahl von Zellaggregaten (102A, 102B), die drei oder mehr Zellen (104A, 104B) umfassen, in dem Phasenverschiebungsbild zu bestimmen; und/oder
die Steuerung (124) dazu eingerichtet ist, ein Verfahren (300) zum Detektieren von Zellaggregaten (102A, 102B) von biologischen Zellen (104A, 104B) nach einem der Ansprüche 1 bis 5 auszuführen.

10. Verfahren (800) zum Detektieren von zellulären und/oder molekularen biologischen Objekten (102A, 102B, 104A, 104B, 904) mittels eines quantitativen Phasenkontrastmikroskops (108), wobei das Verfahren (800) Folgendes umfasst:
Markieren von biologischen Objekten (102A, 102B, 104A, 104B, 904) aus einer Probe mit Markerobjekten (900, 900-I, 900-II), um Verbundaggregate zu bilden, wobei jedes der Verbundaggregate ein oder mehrere der biologischen Objekte (102A, 102B, 104A, 104B, 904) und ein oder mehrere der Markerobjekte (900, 900-I, 900-II) umfasst;
Herstellen einer Suspension, wobei die Suspension Verbundaggregate und ein viskoelastisches Fluid umfasst, wobei das viskoelastische Fluid ein scherverdünnendes Polymer mit einem Molekulargewicht zwischen 2 MDa und 10 MDa umfasst und wobei ein Massenanteil des scherverdünnenden Polymers in der Suspension weniger als 0,2 % beträgt;
Erzeugen eines Flusses (208A) der Suspension entlang eines mikrofluidischen Kanals (202), um Verbundaggregate in der Suspension in einer Fokalebene des quantitativen Phasenkontrastmikroskops (108) viskoelastisch zu fokussieren;
Aufnehmen eines oder mehrerer Phasenverschiebungsbilder von biologischen Objekten (102A, 102B, 104A, 104B, 904) und/oder Verbundaggregaten in der Suspension mittels des quantitativen Phasenkontrastmikroskops (108); und
Identifizieren von Verbundaggregaten in dem einen oder den mehreren Phasenverschiebungsbildern.

11. Verfahren (800) nach Anspruch 10, wobei:
das scherverdünnende Polymer ein Molekulargewicht zwischen 3,5 MDa und 4,5 MDa aufweist; und/oder
der Massenanteil des scherverdünnenden Polymers in der Suspension zwischen 0,03 % und 0,12 %, vorzugsweise zwischen 0,04 % und 0,06 % beträgt; und/oder
die biologischen Objekte (102A, 102B, 104A, 104B, 904) eines oder mehrere von biologischen Makromolekülen (904), einzelnen Zellen (104A, 104B) und Zellaggregaten (102A, 102B) sind oder umfassen; und/oder
die Markerobjekte (900, 900-I, 900-II) Mikrokügelchen mit einer Abmessung, insbesondere einem Durchmesser, zwischen 0,5 µm und 30 µm sind oder umfassen und/oder ein Material mit einem Brechungsindex von mindestens 1,45 oder nicht mehr als 1,1 umfassen oder daraus bestehen; und/oder
einige oder alle der Markerobjekte (900, 900-I, 900-II) ein magnetisches Material und/oder ein Material mit einer akustischen Impedanz von mindestens 10 N·s/m³, vorzugsweise von mindestens 30 N·s/m³ umfassen; und/oder
die biologischen Objekte (102A, 102B, 104A, 104B, 904) Thrombozyten (104A) und/oder Leukozyten (104B) sind oder umfassen und einige oder alle der Markerobjekte (900, 900-I, 900-II) eine Thrombozyten-aktivierende Substanz (906), um Thrombozyten-Aggregation und/oder Leukozyten-Thrombozyten-Aggregation zu induzieren, eine gerinnungshemmende Substanz und/oder eine Leukozyten-aktivierende Substanz umfassen.

12. Verfahren (800) nach Anspruch 10 oder 11, wobei die Markerobjekte (900, 900-I, 900-II) Markerobjekte (900-I) eines ersten Typs und Markerobjekte (900-II) eines zweiten Typs umfassen, wobei sich die Markerobjekte (900-II) des zweiten Typs von den Markerobjekten (900-I) des ersten Typs in mindestens einem von einer Größe und einem Brechungsindex unterscheiden, insbesondere wobei sich die Markerobjekte (900-II) des zweiten Typs von den Markerobjekten (900-I) des ersten Typs im Brechungsindex unterscheiden und das Verfahren (800) ferner das Unterscheiden, in dem einen oder den mehreren Phasenverschiebungsbildern, von Markerobjekten (900-II) des zweiten Typs von Markerobjekten (900-I) des ersten Typs basierend auf einer Phasenverschiebung, die mit dem jeweiligen Markerobjekt assoziiert ist, umfasst.

13. Verfahren (800) nach Anspruch 12, wobei die Markerobjekte (900-I) des ersten Typs dazu eingerichtet sind, selektiv an eine Bindungsstelle (902-I) eines ersten Typs auf den biologischen Objekten (102A, 102B, 104A, 104B, 904) zu binden, und die Markerobjekte (900-II) des zweiten Typs dazu eingerichtet sind, selektiv an eine Bindungsstelle (902-II) eines zweiten Typs auf den biologischen Objekten (102A, 102B, 104A, 104B, 904) zu binden, insbesondere wobei:
die Bindungsstelle (900-I) des ersten Typs eine Bindungsstelle auf biologischen Objekten (104B-I) eines ersten Typs ist und die Bindungsstelle (900-II) des zweiten Typs eine Bindungsstelle auf biologischen Objekten (104B-II) eines zweiten Typs ist, oder die Bindungsstelle (900-I) des ersten Typs und die Bindungsstelle (900-II) des zweiten Typs unterschiedliche Bindungsstellen auf biologischen Objekten (904) des gleichen Typs sind; und/oder
die biologischen Objekte (102A, 102B, 104A, 104B, 904) Leukozyten (104B), insbesondere Lymphozyten, sind oder umfassen, die Markerobjekte (900-I) des ersten Typs dazu eingerichtet sind, selektiv an Leukozyten (104B-I) eines ersten Typs, insbesondere an Lymphozyten eines ersten Typs, zu binden, und die Markerobjekte (900-II) des zweiten Typs dazu eingerichtet sind, selektiv an Leukozyten (104B-II) eines zweiten Typs, insbesondere an Lymphozyten eines zweiten Typs, zu binden.

14. Vorrichtung (100) zum Detektieren von zellulären und/oder molekularen biologischen Objekten (102A, 102B, 104A, 104B, 904) mittels eines Verfahrens (800) nach einem der Ansprüche 10 bis 13, wobei die Vorrichtung (100) Folgendes umfasst:
eine Halterung (106), die dazu eingerichtet ist, ein mikrofluidisches System (200) aufzunehmen, das ein Messvolumen (202) umfasst;
ein Mikroskop (108), das dazu eingerichtet ist, Phasenverschiebungsbilder von biologischen Objekten (102A, 102B, 104A, 104B, 904) und/oder Verbundaggregaten in dem Messvolumen (202) aufzunehmen;
eine Mikrofluidik-Einheit (120), die dazu eingerichtet ist, ein Probenfluid aufzunehmen, wobei das Probenfluid eine Suspension ist, die ein viskoelastisches Fluid und Verbundaggregate umfasst, wobei jedes der Verbundaggregate ein oder mehrere biologische Objekte (102A, 102B, 104A, 104B, 904) aus einer Probe und ein oder mehrere Markerobjekte (900, 900-I, 900-II) zum Markieren der biologischen Objekte (102A, 102B, 104A, 104B, 904) umfasst, wobei das viskoelastische Fluid ein scherverdünnendes Polymer mit einem Molekulargewicht zwischen 2 MDa und 10 MDa umfasst und ein Massenanteil des scherverdünnenden Polymers in dem Probenfluid weniger als 0,2 % beträgt, wobei die Mikrofluidik-Einheit (120) dazu eingerichtet ist, einen Fluss (208A) des Probenfluids durch das Messvolumen (202) zu erzeugen, um Verbundaggregate in dem Probenfluidfluss (208A) in einer Fokalebene des Mikroskops (108) viskoelastisch zu fokussieren; und
eine Steuerung (124), die dazu eingerichtet ist, Verbundaggregate in einem von dem Mikroskop (108) erhaltenen Phasenverschiebungsbild des Probenfluidflusses (208A) zu identifizieren,
wobei die Vorrichtung (100) ferner eine Probenherstellungseinheit (122) umfasst, die dazu eingerichtet ist, das viskoelastische Fluid, das das scherverdünnende Polymer mit einem Molekulargewicht zwischen 2 MDa und 10 MDa umfasst, bereitzustellen, um das Probenfluid herzustellen, das das viskoelastische Fluid und Verbundaggregate umfasst, wobei der Massenanteil des scherverdünnenden Polymers in dem Probenfluid weniger als 0,2 % beträgt.

15. Vorrichtung (100) nach Anspruch 14, wobei:
die Probenherstellungseinheit (122) ferner dazu eingerichtet ist, Markerobjekte (900, 900-I, 900-II) zum Markieren von biologischen Objekten (102A, 102B, 104A, 104B, 904) aus der Probe bereitzustellen, wobei jedes der Markerobjekte (900, 900-I, 900-II) dazu eingerichtet ist, an ein oder mehrere biologische Objekte (102A, 102B, 104A, 104B, 904) zu binden, um ein Verbundaggregat zu bilden; und/oder
die Steuerung (124) dazu eingerichtet ist, ein Verfahren (800) zum Detektieren von zellulären und/oder molekularen biologischen Objekten (102A, 102B, 104A, 104B, 904) nach einem der Ansprüche 10 bis 13 auszuführen.

## Revendications

1. Procédé (300) de détection d'agrégats cellulaires (102A, 102B) de cellules biologiques (104A, 104B) à l'aide d'un microscope à contraste de phase quantitatif (108), le procédé (300) comprenant :
la préparation d'une suspension, la suspension comprenant un fluide viscoélastique et des cellules biologiques (104A, 104B) provenant d'un échantillon, dans lequel le fluide viscoélastique comprend un polymère à viscosité décroissante sous cisaillement ayant une masse moléculaire comprise entre 2 MDa et 10 MDa et dans lequel une fraction massique du polymère à viscosité décroissante sous cisaillement dans la suspension est inférieure à 0,2 %;
la génération d'un écoulement (208A) de la suspension le long d'un canal microfluidique (202) afin de focaliser viscoélastiquement les agrégats cellulaires (102A, 102B) dans la suspension dans un plan focal du microscope à contraste de phase quantitatif (108) ;
la prise d'une ou plusieurs images de déphasage des cellules biologiques (104A, 104B) dans la suspension à l'aide du microscope à contraste de phase quantitatif (108) ; et
l'identification d'agrégats cellulaires (102A, 102B) dans la ou les images de déphasage.

2. Procédé (300) selon la revendication 1, dans lequel :
l'identification des agrégats cellulaires (102A, 102B) dans la ou les images de déphasage comprend la détermination d'un nombre de cellules dans l'agrégat cellulaire (102A, 102B) respectif et/ou d'un type cellulaire d'une partie ou de la totalité des cellules (104A, 104B) dans l'agrégat cellulaire (102A, 102B) respectif, en particulier dans lequel la détermination du nombre de cellules dans l'agrégat cellulaire (102A, 102B) respectif et/ou du type cellulaire d'une partie ou de la totalité des cellules (104A, 104B) dans l'agrégat cellulaire (102A, 102B) respectif comprend : l'exécution d'une segmentation d'image sur une portion d'une image de déphasage associée à l'agrégat cellulaire (102A, 102B) afin d'identifier des constituants (104A, 104B) de l'agrégat cellulaire (102A, 102B), la détermination d'un ou plusieurs paramètres morphologiques pour une partie ou la totalité des constituants (104A, 104B) de l'agrégat cellulaire (102A, 102B) à partir de l'image segmentée, et la détermination du type cellulaire des constituants (104A, 104B) respectifs sur la base du ou des paramètres morphologiques ; et/ou
le procédé (300) comprend en outre l'identification de cellules isolées (104A, 104B) dans la ou les images de déphasage et la détermination d'un type cellulaire des cellules isolées (104A, 104B).

3. Procédé (300) selon l'une quelconque des revendications précédentes, dans lequel :
le polymère à viscosité décroissante sous cisaillement a une masse moléculaire comprise entre 3,5 MDa et 4,5 MDa ; et/ou
la fraction massique du polymère à viscosité décroissante sous cisaillement dans la suspension est comprise entre 0,03 % et 0,12 %, de préférence entre 0,04 % et 0,06 %; et/ou
le polymère à viscosité décroissante sous cisaillement est du poly(oxyde d'éthylène) ou du poly(N-vinylpyrrolidone) ; et/ou
une vitesse d'écoulement de la suspension le long du canal microfluidique (202) est choisie de sorte qu'une contrainte de cisaillement à l'intérieur de l'écoulement (208A) soit inférieure à 50 Pa, de préférence inférieure à 10 Pa ; et/ou
une longueur depuis une entrée du canal microfluidique jusqu'à un point focal du microscope à contraste de phase quantitatif (108) est comprise entre 30 mm et 60 mm, de préférence entre 35 mm et 50 mm ; et/ou
une hauteur de l'écoulement (208A) de la suspension dans une direction perpendiculaire au plan focal du microscope à contraste de phase quantitatif (108) est comprise entre 30 µm et 100 µm, de préférence entre 40 µm et 60 µm.

4. Procédé (300) selon l'une quelconque des revendications précédentes, comprenant en outre la génération d'au moins deux écoulements gaine (208B) le long du canal microfluidique (202) afin de focaliser hydrodynamiquement l'écoulement (208A) de la suspension de sorte que les agrégats cellulaires (102A, 102B) dans la suspension soient focalisés dans le plan focal du microscope à contraste de phase quantitatif (108), en particulier dans lequel :
une partie ou la totalité des au moins deux écoulements gaine (208B) comprennent un fluide viscoélastique ; et/ou
l'écoulement (208A) de la suspension est focalisé hydrodynamiquement par la génération d'une paire d'écoulements gaine latéral sandwichant l'écoulement (208A) de la suspension dans une première direction et d'une paire d'écoulements gaine vertical (208B) sandwichant l'écoulement (208A) de la suspension dans une seconde direction (Z) perpendiculaire à la première direction.

5. Procédé (300) selon l'une quelconque des revendications précédentes, dans lequel l'échantillon est un échantillon de sang total ou un échantillon de fraction sanguine et l'identification d'agrégats cellulaires (102A, 102B) dans la ou les images de déphasage comprend l'identification d'agrégats plaquettaires (102A) et/ou d'agrégats leucocytaires-plaquettaires (102B) dans la ou les images de déphasage, en particulier dans lequel :
le procédé (300) comprend en outre la détermination d'un nombre d'agrégats leucocytaires-plaquettaires (102B) comprenant au moins deux leucocytes (104B) et/ou d'un nombre d'agrégats cellulaires (102A, 102B) comprenant au moins trois cellules (104A, 104B) dans la ou les images de déphasage ; et/ou
la préparation de la suspension comprend la dilution de l'échantillon de sang total ou de l'échantillon de fraction sanguine, respectivement, par un facteur compris entre 1:10 et 1:1000, de préférence entre 1:50 et 1:200; et/ou
la préparation de la suspension ne comprend pas de lyse des érythrocytes, de sphérisation des plaquettes et/ou des érythrocytes et/ou de marquage ou de coloration des cellules ; et/ou
le procédé (300) comprend en outre l'ajout d'une substance activatrice des plaquettes et/ou d'une substance activatrice des leucocytes afin d'induire une agrégation plaquettaire et/ou une agrégation leucocytaire-plaquettaire.

6. Dispositif (100) de détection d'agrégats cellulaires (102A, 102B) de cellules biologiques (104A, 104B) à l'aide d'un procédé (300) selon l'une quelconque des revendications précédentes, le dispositif (100) comprenant :
un support (106) configuré pour recevoir un système microfluidique (200) comprenant un volume de mesure (202) ;
un microscope (108) configuré pour prendre des images de déphasage de cellules biologiques (104A, 104B) dans le volume de mesure (202) ;
une unité de microfluidique (120) configurée pour recevoir un fluide échantillon, dans lequel le fluide échantillon est une suspension comprenant un fluide viscoélastique et des cellules biologiques (104A, 104B) provenant d'un échantillon, le fluide viscoélastique comprenant un polymère à viscosité décroissante sous cisaillement ayant une masse moléculaire comprise entre 2 MDa et 10 MDa et une fraction massique du polymère à viscosité décroissante sous cisaillement dans le fluide échantillon étant inférieure à 0,2 %, dans lequel l'unité de microfluidique (120) est configurée pour générer un écoulement (208A) du fluide échantillon à travers le volume de mesure (202) afin de focaliser viscoélastiquement les agrégats cellulaires (102A, 102B) dans l'écoulement du fluide échantillon (208A) dans un plan focal du microscope (108) ; et
une unité de commande (124) configurée pour identifier des agrégats cellulaires (102A, 102B) dans une image de déphasage de l'écoulement du fluide échantillon (208A) obtenue à partir du microscope (108), dans lequel le dispositif (100) comprenant en outre une unité de préparation d'échantillon (122) configurée pour fournir le fluide viscoélastique comprenant le polymère à viscosité décroissante sous cisaillement ayant une masse moléculaire comprise entre 2 MDa et 10 MDa pour préparer le fluide échantillon comprenant le fluide viscoélastique et des cellules biologiques (104A, 104B) provenant de l'échantillon, dans lequel la fraction massique du polymère à viscosité décroissante sous cisaillement dans le fluide échantillon est inférieure à 0,2 %.

7. Dispositif (100) selon la revendication 6, dans lequel :
le système microfluidique (200) comprend en outre une jonction de focalisation hydrodynamique (204) en communication fluidique avec le volume de mesure (202), la jonction de focalisation hydrodynamique (204) étant configurée pour générer au moins deux écoulements gaine (208B) entourant l'écoulement du fluide échantillon (208A) afin de focaliser hydrodynamiquement l'écoulement du fluide échantillon (208A) dans le volume de mesure (202) ; et
l'unité de microfluidique (120) est configurée pour fournir un fluide gaine à la jonction de focalisation hydrodynamique (204) afin de focaliser hydrodynamiquement l'écoulement du fluide échantillon (208A) dans le volume de mesure (208) de sorte que les agrégats cellulaires (102A, 102B) dans l'écoulement du fluide échantillon (208A) soient focalisés dans le plan focal du microscope (108).

8. Dispositif (100) selon la revendication 6 ou 7, dans lequel l'unité de préparation d'échantillon (122) est configurée pour :
ajuster une fraction massique du polymère à viscosité décroissante sous cisaillement dans le fluide échantillon au moins dans une plage comprise entre 0,03 % et 0,12 %, de préférence au moins dans une plage comprise entre 0 % et 0,2 % ; et/ou
diluer le fluide échantillon par un facteur compris entre 1:10 et 1:1000, de préférence entre 1:50 et 1:200 ; et/ou
ajouter une substance activatrice des plaquettes et/ou une substance activatrice des leucocytes au fluide échantillon et/ou au fluide gaine.

9. Dispositif (100) selon l'une quelconque des revendications 6 à 8, dans lequel :
l'unité de microfluidique (120) est configurée pour commander une vitesse d'écoulement de l'écoulement du fluide échantillon (208A) dans le volume de mesure (202), dans lequel la vitesse d'écoulement de l'écoulement du fluide échantillon (208A) est comprise entre 1 mm/s et 250 mm/s, de préférence entre 5 mm/s et 100 mm/s ; et/ou
l'unité de commande (124) est configurée pour déterminer un nombre de cellules dans un agrégat cellulaire (102A, 102B) identifié et/ou un type cellulaire d'une partie ou de la totalité des cellules dans l'agrégat cellulaire (102A, 102B) identifié ; et/ou
l'unité de commande (124) est configurée pour identifier des agrégats plaquettaires (102A) et/ou des agrégats leucocytaires-plaquettaires (102B) dans l'image de déphasage, en particulier dans lequel l'unité de commande (124) est en outre configurée pour déterminer un nombre d'agrégats leucocytaires-plaquettaires (102B) comprenant au moins deux leucocytes (104B) et/ou un nombre d'agrégats cellulaires (102A, 102B) comprenant au moins trois cellules (104A, 104B) dans l'image de déphasage ; et/ou
l'unité de commande (124) est configurée pour exécuter un procédé (300) de détection d'agrégats cellulaires (102A, 102B) de cellules biologiques (104A, 104B) selon l'une quelconque des revendications 1 à 5.

10. Procédé (800) de détection d'objets biologiques cellulaires et/ou moléculaires (102A, 102B, 104A, 104B, 904) à l'aide d'un microscope à contraste de phase quantitatif (108), le procédé (800) comprenant :
le marquage d'objets biologiques (102A, 102B, 104A, 104B, 904) provenant d'un échantillon avec des objets marqueurs (900, 900-I, 900-II) pour former des agrégats composites, dans lequel chacun des agrégats composites comprend un ou plusieurs desdits objets biologiques (102A, 102B, 104A, 104B, 904) et un ou plusieurs desdits objets marqueurs (900, 900-I, 900-II) ;
la préparation d'une suspension, la suspension comprenant des agrégats composites et un fluide viscoélastique, dans lequel le fluide viscoélastique comprend un polymère à viscosité décroissante sous cisaillement ayant une masse moléculaire comprise entre 2 MDa et 10 MDa et dans lequel une fraction massique du polymère à viscosité décroissante sous cisaillement dans la suspension est inférieure à 0,2 % ;
la génération d'un écoulement (208A) de la suspension le long d'un canal microfluidique (202) afin de focaliser viscoélastiquement les agrégats composites dans la suspension dans un plan focal du microscope à contraste de phase quantitatif (108) ;
la prise d'une ou plusieurs images de déphasage d'objets biologiques (102A, 102B, 104A, 104B, 904) et/ou d'agrégats composites dans la suspension à l'aide du microscope à contraste de phase quantitatif (108) ; et
l'identification d'agrégats composites dans la ou les images de déphasage.

11. Procédé (800) selon la revendication 10, dans lequel :
le polymère à viscosité décroissante sous cisaillement a une masse moléculaire comprise entre 3,5 MDa et 4,5 MDa ; et/ou
la fraction massique du polymère à viscosité décroissante sous cisaillement dans la suspension est comprise entre 0,03 % et 0,12 %, de préférence entre 0,04 % et 0,06 % ; et/ou
lesdits objets biologiques (102A, 102B, 104A, 104B, 904) sont ou comprennent une ou plusieurs macromolécules biologiques (904), cellules isolées (104A, 104B) et agrégats cellulaires (102A, 102B) ; et/ou
lesdits objets marqueurs (900, 900-I, 900-II) sont ou comprennent des microbilles ayant une dimension physique, en particulier un diamètre, comprise entre 0,5 µm et 30 µm et/ou comprenant ou consistant en un matériau ayant un indice de réfraction d'au moins 1,45 ou d'au plus 1,1 ; et/ou
une partie ou la totalité desdits objets marqueurs (900, 900-I, 900-II) comprennent un matériau magnétique et/ou un matériau ayant une impédance acoustique d'au moins 10 N·s/m³, de préférence d'au moins 30 N·s/m³ ; et/ou
lesdits objets biologiques (102A, 102B, 104A, 104B, 904) sont ou comprennent des plaquettes (104A) et/ou des leucocytes (104B) et une partie ou la totalité desdits objets marqueurs (900, 900-I, 900-II) comprennent une substance activatrice des plaquettes (906) afin d'induire une agrégation plaquettaire et/ou une agrégation leucocytaire-plaquettaire, une substance inhibitrice de la coagulation et/ou une substance activatrice des leucocytes.

12. Procédé (800) selon la revendication 10 ou 11, dans lequel lesdits objets marqueurs (900, 900-I, 900-II) comprennent des objets marqueurs (900-I) d'un premier type et des objets marqueurs (900-II) d'un second type, les objets marqueurs (900-II) du second type différant des objets marqueurs (900-I) du premier type par au moins une taille et un indice de réfraction, en particulier dans lequel les objets marqueurs (900-II) du second type diffèrent des objets marqueurs (900-I) du premier type par l'indice de réfraction et le procédé (800) comprend en outre la distinction, dans la ou les images de déphasage, des objets marqueurs (900-II) du second type par rapport aux objets marqueurs (900-I) du premier type sur la base d'un déphasage associé à l'objet marqueur respectif.

13. Le procédé (800) selon la revendication 12, lequel les objets marqueurs (900-I) du premier type sont configurés pour se lier sélectivement à un site de liaison (902-I) d'un premier type sur les objets biologiques (102A, 102B, 104A, 104B, 904) et les objets marqueurs (900-II) du second type sont configurés pour se lier sélectivement à un site de liaison (902-II) d'un second type sur les objets biologiques (102A, 102B, 104A, 104B, 904), en particulier lequel :
le site de liaison (900-I) du premier type est un site de liaison sur des objets biologiques (104B-I) d'un premier type et le site de liaison (900-II) du second type est un site de liaison sur des objets biologiques (104B-II) d'un second type, ou le site de liaison (900-I) du premier type et le site de liaison (900-II) du second type sont des sites de liaison différents sur des objets biologiques (904) du même type ; et/ou
lesdits objets biologiques (102A, 102B, 104A, 104B, 904) sont ou comprennent des leucocytes (104B), en particulier des lymphocytes, les objets marqueurs (900-I) du premier type étant configurés pour se lier sélectivement à des leucocytes (104B-I) d'un premier type, en particulier à des lymphocytes d'un premier type, et les objets marqueurs (900-II) du second type étant configurés pour se lier sélectivement à des leucocytes (104B-II) d'un second type, en particulier à des lymphocytes d'un second type.

14. Dispositif (100) de détection d'objets biologiques cellulaires et/ou moléculaires (102A, 102B, 104A, 104B, 904) utilisant un procédé (800) selon l'une quelconque des revendications 10 à 13, le dispositif (100) comprenant :
un support (106) configuré pour recevoir un système microfluidique (200) comprenant un volume de mesure (202) ;
un microscope (108) configuré pour acquérir des images de déphasage d'objets biologiques (102A, 102B, 104A, 104B, 904) et/ou d'agrégats composites dans le volume de mesure (202) ;
une unité de microfluidique (120) configurée pour recevoir un fluide échantillon, lequel le fluide échantillon est une suspension comprenant un fluide viscoélastique et des agrégats composites, chacun comprenant un ou plusieurs objets biologiques (102A, 102B, 104A, 104B, 904) issus d'un échantillon et un ou plusieurs objets marqueurs (900, 900-I, 900-II) pour le marquage des objets biologiques (102A, 102B, 104A, 104B, 904), le fluide viscoélastique comprenant un polymère à viscosité décroissante sous cisaillement ayant une masse moléculaire comprise entre 2 MDa et 10 MDa et une fraction massique du polymère à viscosité décroissante sous cisaillement dans le fluide échantillon étant inférieure à 0,2 %, lequel l'unité de microfluidique (120) est configurée pour générer un écoulement (208A) du fluide échantillon à travers le volume de mesure (202) afin de focaliser viscoélastiquement les agrégats composites dans l'écoulement du fluide échantillon (208A) dans un plan focal du microscope (108) ; et
une unité de commande (124) configurée pour identifier des agrégats composites dans une image de déphasage de l'écoulement du fluide échantillon (208A) obtenue à partir du microscope (108), dans lequel le dispositif (100) comprend en outre une unité de préparation d'échantillon (122) configurée pour fournir le fluide viscoélastique comprenant le polymère à viscosité décroissante sous cisaillement ayant une masse moléculaire comprise entre 2 MDa et 10 MDa pour préparer le fluide échantillon comprenant le fluide viscoélastique et des agrégats composites, lequel la fraction massique du polymère à viscosité décroissante sous cisaillement dans le fluide échantillon est inférieure à 0,2 %.

15. Dispositif (100) selon la revendication 14, lequel :
l'unité de préparation d'échantillon (122) est en outre configurée pour fournir des objets marqueurs (900, 900-I, 900-II) pour le marquage d'objets biologiques (102A, 102B, 104A, 104B, 904) issus de l'échantillon, lequel chacun des objets marqueurs (900, 900-I, 900-II) est configuré pour se lier à un ou plusieurs objets biologiques (102A, 102B, 104A, 104B, 904) afin de former un agrégat composite ; et/ou
l'unité de commande (124) est configurée pour exécuter un procédé (800) de détection d'objets biologiques cellulaires et/ou moléculaires (102A, 102B, 104A, 104B, 904) selon l'une quelconque des revendications 10 à 13.
